# EUROPEAN PATENT SPECIFICATION

(11) **EP 3 818 815 B1**
(45) Date of publication and mention of the grant of the patent: **26.02.2025**
(21) Application number: 19208194.1
(22) Date of filing: 08.11.2019
(51) Int. Cl.: A01F 15/08

(54) **AGRICULTURAL BALER**
LANDWIRTSCHAFTLICHE BALLENPRESSE
RAMASSEUSE-PRESSE AGRICOLE

(43) Date of publication of application: 12.05.2021
(73) Proprietor: CNH Industrial Belgium NV, 8210 Zedelgem (BE)
(72) Inventor: MONTEYNE, Niklaas G C, 8370 Blankenberge (BE); DEMON, Frederik, 8310 Brugge (Sint-Kruis) (BE); BONTE, Xavier G J M, 4505 PB Zuidzande (NL)
(74) Representative: CNH Industrial IP Department

(56) References cited:
- EP-A1- 0 916 253
- EP-A1- 2 825 019
- EP-A1- 2 993 971
- EP-B1- 0 916 253
- EP-B1- 2 825 019
- EP-B1- 2 993 971

## Description

### BACKGROUND OF THE INVENTION

The present disclosure relates to agricultural systems that include agricultural balers. Other aspects of the present disclosure relate to a method for controlling door actuators of an agricultural machinery and a corresponding computer program.

Agricultural harvesting machines, such as balers, are used to consolidate and package crop material to facilitate the storage and handling of the crop material for later use. In the case of hay, a mower-conditioner is typically used to cut and condition the crop material for windrow drying in the sun. In the case of straw, an agricultural combine discharges non-grain crop material from the rear of the combine defining the straw (such as wheat or oat straw) which is to be picked up by the baler. The cut crop material is typically raked and dried, and a baler, such as a large square baler or round baler, straddles the windrows and travels along the windrows to pick up the crop material and form it into bales.

On a large square baler, a pickup unit at the front of the baler gathers the cut and windrowed crop material from the ground. The pickup unit includes a pickup roll, and optionally may include other components such as side shields, stub augers, wind guard, etc.

A packer unit is used to move the crop material from the pickup unit to a duct or pre-compression chamber. The packer unit forms a wad of crop within the pre-compression chamber, which is then transferred to a main bale chamber. (For purposes of discussion, the charge of crop material within the pre-compression chamber will be termed a "wad", and the charge of crop material after being compressed within the main bale chamber will be termed a "flake"). Typically, such a packer unit includes packer tines or forks to move the crop material from the pickup unit into the pre-compression chamber. Instead of a packer unit it is also known to use a rotor cutter unit, which chops the crop material into smaller pieces.

A stuffer unit transfers the wad of crop material in charges from the pre-compression chamber to the main bale chamber. Typically, such a stuffer unit includes stuffer forks which are used to move the wad of crop material from the pre-compression chamber to the main bale chamber, in sequence with the reciprocating action of a plunger within the main bale chamber.

In the main bale chamber, the plunger compresses the wad of crop material into flakes to form a bale and, at the same time, gradually advances the bale toward the outlet of the bale chamber. The plunger reciprocates, back and forth, toward and away from the discharge end of the baler. The plunger may include a number of rollers, which extend laterally outward from the sides of the plunger. The rollers on each side of the plunger are received within a respective plunger slot formed in the sidewalls of the bale chamber, with the plunger slots guiding the plunger during the reciprocating movements.

When enough flakes have been added and the bale reaches a full (or other predetermined) size, a number of knotters are actuated which wrap and tie twine, cord or the like around the bale while it is still in the main bale chamber. The twine is cut and the formed bale is ejected out the back of the baler as a new bale is formed.

Typically, the bale chamber includes a stationary ceiling, floor and a pair of side walls at the upstream end of the bale chamber. The ceiling and side walls terminate adjacent to a number of so-called "density doors", including a top door and two side doors. The density doors may be pivoted about a pivot axis at the upstream end and clamp against the formed bale to hold the bale and provide resistance as a next bale is formed in the bale chamber. The pressure exerted by the density doors on the bale controls the density of the subsequently formed bales. If the density doors are not correctly pressurised, bales of inadequate density and thus quality may be produced. This may be particularly problematic during start-up of the agricultural baler, since the density doors need to be positioned adequately before the baling process can commence.

In view of the above, there is generally a need for an agricultural machinery and a method of controlling the latter that provides the ability to quickly bring the density doors into position.

EP 2 993 971 A1 discloses methods and systems for determining the plunger load and use of such methods and systems for controlling such balers.

EP 0 916 253 A1 discloses using an electronic controller which controls at least one press channel bar based on the hydraulic pressure. The press channel bar is also controllable based on the pressing force. The influence of hydraulic pressure and pressing force is adjustable using a mixing control device.

EP 2 825 019 A1 discloses determining the load on an element of the drive system of a plunger of an agricultural baler, use thereof for controlling such balers.

It is an aim of the present disclosure to solve or at least ameliorate one or more problems of the prior art.

### SUMMARY OF THE INVENTION

Aspects and embodiments of the invention provide an agricultural baler and a method for controlling a density door actuator assembly as claimed in the appended claims.

According to a first aspect of the present invention, there is provided an agricultural system comprising:
an agricultural baler, comprising:
   a bale chamber partly defined by at least one movable density door;
   at least one actuator for moving the at least one density door; and
   a rotary input shaft connected by way of a baler driveline to a rotatable flywheel, the driveline including a transmission for controllably transferring rotary drive between the input shaft and the flywheel, wherein the transmission has an output shaft; and
a control unit configured to:
   receive a routine-trigger-signal;
   receive an output-shaft-speed signal that is representative of a rotational speed of the output shaft;
   in response to receiving the routine-trigger-signal, compare the output-shaft-speed signal with one or more threshold-conditions, and
   if the output-shaft-speed signal does not satisfy at least one of the threshold-conditions, then:
      determine an actuator-control-signal for causing the at least one actuator to move the at least one density door in order to enlarge the bale chamber; and
      provide the actuator-control-signal to a drive system for driving the at least one actuator. The control unit is configured to stop comparing the output-shaft-speed signal with the one or more threshold-conditions after a start-up-duration period of time.

In an embodiment, the one of more threshold-conditions comprise an output-shaft-speed-threshold-level, and the control unit is configured to determine that the output-shaft-speed signal does not satisfy at least one of the threshold-conditions if the output-shaft-speed signal is lower than the output-shaft-speed-threshold-level.

The output-shaft-speed-threshold-level may comprise a predetermined proportion of an expected output shaft speed.

The control unit may be configured to:
receive an input-shaft-speed signal that is representative of a rotational speed of the input shaft; and
determine the output-shaft-speed-threshold-level based on the input-shaft-speed signal.

In another embodiment, the one of more threshold-conditions comprise an output-shaft-speed-threshold-duration, and the control unit is configured to determine that the output-shaft-speed signal does not satisfy at least one of the threshold-conditions if the output-shaft-speed signal is lower than the output-shaft-speed-threshold-level after expiry of the output-shaft-speed-threshold-duration following receipt of the routine-trigger-signal.

The control unit may be configured to:
receive an input-shaft-speed signal that is representative of a rotational speed of the input shaft; and
determine the output-shaft-speed-threshold-duration based on the input-shaft-speed signal.

The actuator-control-signal may be for causing the at least one actuator to move the at least one density door by a door-displacement-amount in order to enlarge the bale chamber.

In another embodiment, the door-displacement-amount comprises:
a distance that will put the door at an end position that represents the maximum size of the bale chamber in the dimension in which the door can move; or
a predetermined-displacement-amount.

In another embodiment, the control unit may be configured to:
compare the output-shaft-speed signal with a plurality of threshold-conditions; and
determine the door-displacement-amount based on which of the plurality of threshold-conditions have not been satisfied.

In another embodiment, the control unit is configured to:
determine an error-value based on the comparison between the output-shaft-speed signal and the one or more threshold-conditions; and
determine the door-displacement-amount based on the error-value.

In another embodiment, the control unit is configured to, subsequently:
compare the output-shaft-speed signal with one or more end-threshold-conditions; and
if the output-shaft-speed signal satisfies one or more of the end-threshold-conditions, then determine an actuator-control-signal for causing the at least one actuator to move the at least one density door such that a door-displacement-amount is removed.

In another embodiment, the control unit is configured to:
receive a clutch-engagement-signal that represents the degree with which a clutch in the transmission has been engaged; and
automatically generate the routine-trigger-signal based on the clutch-engagement-signal.

In another embodiment, the agricultural system further comprises:
a plunger-position-sensor for providing a plunger-position-signal that represents the position of the plunger in the bale chamber; and
wherein the control unit is configured to determine the actuator-control-signal for enlarging the bale chamber if: (i) the output-shaft-speed signal does not satisfy at least one of the threshold-conditions; and (ii) the plunger-position-signal takes one or more predetermined plunger-position-values.

According to another aspect of the present invention, there is provided a method for controlling an agricultural baler, the agricultural baler comprising:
a bale chamber partly defined by at least one movable density door;
at least one actuator for moving the at least one density door; and
a rotary input shaft connected by way of a baler driveline to a rotatable flywheel, the driveline including a transmission for controllably transferring rotary drive between the input shaft and the flywheel, wherein the transmission has an output shaft;
wherein the method comprises:
   receiving a routine-trigger-signal;
   receiving an output-shaft-speed signal that is representative of a rotational speed of the output shaft;
   in response to receiving the routine-trigger-signal, comparing the output-shaft-speed signal with one or more threshold-conditions, and
   if the output-shaft-speed signal does not satisfy at least one of the threshold-conditions, then:
      determining an actuator-control-signal for causing the at least one actuator to move the at least one density door in order to enlarge the bale chamber; and
      providing the actuator-control-signal to a drive system for driving the at least one actuator;
      stopping comparing the output-shaft-speed signal with the one or more threshold-conditions after a start-up-duration period of time.

According to another aspect of the present disclosure, there is provided a computer program comprising instructions which, when executed by the control unit of the agricultural system, causes the agricultural system to perform the steps of the above method.

According to another aspect of the present disclosure, which is not claimed, there is provided an agricultural machinery comprising any agricultural baler disclosed herein (e.g. a baler implement), a control unit and an agricultural vehicle for transporting the agricultural baler implement. There may be provided a computer program, which when run on a computer, causes the computer to configure any apparatus, including a control unit, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

The agricultural work vehicle (or tractor) may include one or more control devices, such as but not limited to programmable or non-programmable processors. Similarly, the baler implement may include one or more control devices, such as but not limited to programmable or non-programmable processors. Additionally, or alternatively, the baler implement may be controlled by one or more control devices of the agricultural work vehicle. Similarly, the agricultural work vehicle may be controlled by one or more control devices of the baler implement.

The agricultural work vehicle and/or the baler implement may be remote controlled, e.g. from a farm office. Accordingly, the agricultural work vehicle may include one or more communication interfaces for connection to a remote processor and/or a remote controller. Similarly, the baler implement may include one or more communication interfaces for connection to a remote processor and/or a remote controller.

### BRIEF DESCRIPTION OF THE DRAWINGS

The above-mentioned and other features and advantages of this disclosure, and the manner of attaining them, will become more apparent and the disclosure will be better understood by reference to the following description of embodiments of the disclosure taken in conjunction with the accompanying drawings, wherein:
Figure 1 is a schematic representation of a tractor-baling machine combination in accordance with embodiments described herein;
Figure 2 is a cross-sectional view of a transmission, forming part of the baling machine visible in Figure 1, according to embodiments described herein;
Figure 3 is a schematic representation of the driveline components of the transmission of Figure 2.;
Figure 4 is a perspective view of the bale chamber formed according to the present disclosure;
Figure 5 is a schematic view of a fluid supply circuit that is fluidly coupled to fluid cylinders coupled to density doors of the bale chamber illustrated in Figures 1 and 4;
Figure 6 is a top perspective view of a top density door of the bale chamber illustrated in Figures 1 and 4;
Figure 7 is a side perspective view of a side density door of the bale chamber illustrated in Figures 1 and 4; and
Figure 8 is a schematic flow chart of a method for controlling an agricultural baler according to the present disclosure.

Corresponding reference characters indicate corresponding parts throughout the several views. The exemplifications set out herein illustrate embodiments of the disclosure, and such exemplifications are not to be construed as limiting the scope of the disclosure in any manner.

### DETAILED DESCRIPTION OF THE INVENTION

Referring to the drawings a baling machine 10 is shown being towed behind a towing vehicle that in the illustrated embodiment non-limitingly is an agricultural tractor 11.

The tractor 11 is a conventional tractor including a vehicle frame/body 11a, rear-mounted cab 11b, front, steerable, ground-engaging wheels 11c and rear, driven, ground-engaging wheels 11d. Tractor 11 includes at its rear end between the rear wheels 11d a power take-off 12 of a conventional design that includes a rotative coupling for a PTO shaft 13 that extends rearwardly of the tractor 11. The PTO 12 may be engaged to cause rotation of the PTO shaft 13 or disengaged, such that the shaft 13 is not powered to rotate, for example through the operation of a control lever or pushbutton.

The tractor 11 may have any of a range of engine power outputs including but not limited to 200 hp, 300 hp and 400 hp. The baling machine 10 is operable when towed by any such tractor 11, without a need for adjustment or modification, for the reasons explained below.

The PTO shaft 13 may be any of a variety of lengths. A relatively short PTO shaft 13 and drawbar 14 (described below) minimises the distance between the pick-up 19 (described below) of the baling machine 10 and the tractor 10. This provides certain advantages, although in some other respects a longer PTO shaft 13 may provide good adjustment flexibility.

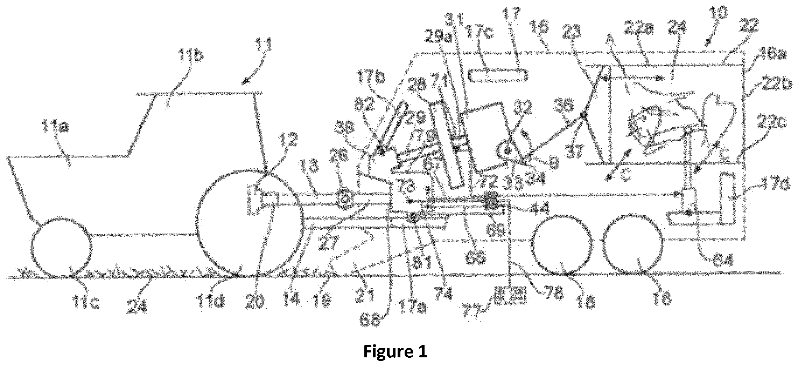

The partial driveline represented by the PTO 12 and PTO shaft 13 may in various types of tractor include a PTO clutch 20 that as described above seeks to protect the engine of the tractor 11 from damage caused e.g. when an excessive loading on the PTO shaft causes engine stalling. The PTO clutch 20 is shown schematically in Figure 1. It may readily be envisaged by the person of skill in the art and typically would be a one-way clutch of a kind that permits free movement when rotating in one direction, and transfers rotary drive via the PTO shaft 13 when rotating in the opposite direction. Other forms and locations are possible in respect of the clutch 20.

The baling machine 10 is secured to the rear of the tractor 11 by way of a drawbar 14 that typically is of an "A"-shape when viewed in plan and extends forwardly of the baling machine 10 below the PTO shaft 13. The drawbar 14 is pivotably secured to a conventional towing hitch at the rear of the tractor 11.

The baling machine 10 includes a housing or cover 16 that may take a variety of forms. The housing 16 in most baling machine designs includes a section 16a that is open to permit ejection of formed bales at the rear of the baling machine 10.

Panels defining the housing 16 further may be openable or removable in order to permit maintenance of the interior parts of the baling machine 10 replacement of bobbins of twine used for tying completed bales or the clearance of blockages that can arise for a variety of reasons.

The housing 16 of the baling machine 10 is secured to a baling machine frame 17 selected parts 17a, 17b, 17c, 17d of which are illustrated in Figure 1, with the complete frame 17 being omitted for ease of illustration.

The baling machine 10 is mobile and to this end it includes secured to the frame 17 two or more ground-engaging wheels 18.

In the embodiment illustrated four wheels are provided, being left and right front wheels and left and right rear wheels 18. In Figure 1 the left-hand side front and rear wheels are visible.

In this regard the front or forward end of the baling machine 10 is the end of it that is closest to the towing tractor 11, and the terms *"rear", "left", "right", "upper", "lower"* and derivative terms are interpreted accordingly and as though an observer is looking forwardly along the baling machine 10.

The wheels 18 may be mounted relative to the frame 17 by way of suspension components and passive or active steering components as would be known to the person of skill in the art, or they may be mounted more simply. The wheels 18 optionally may include tyres and/or gripping elements that are omitted from Figure 1 for ease of viewing.

A pick-up 19 projects forwardly of the baling machine 10 and is arranged to collect cut plant matter 24 lying in a field in which the baling machine 10 moves as influenced by the motion of the tractor 11. The pick-up 19 passes the plant matter to a conveyor 21. The conveyor 21 conveys the plant matter inside the baling machine 10 where it undergoes baling.

Numerous designs of pick-up 19 and conveyor 21 are known in the baling machine art and fall within the scope of embodiments disclosed herein. The precise designs of the pick-up 19 and conveyor 21 are essentially immaterial to the nature and operation of the invention, and therefore are not described in detail.

As mentioned, the baling machine 10 includes an internal bale chamber 22. This is an elongate, cuboidal volume defined by chamber walls of which top and bottom walls 22a and 22c are visible in Figure 1. The bale chamber 22 in a typical baling machine design extends in a fore and aft direction in an upper part of the rear of the volume enclosed by the housing 16.

The rear 22b of the bale chamber coincides with the aforementioned open housing section 16a in order to allow ejection of completed bales in a *per* se known manner.

A crop flow path exists inside the baling machine 10 between the conveyor 21 and the bale chamber 22. The crop flow path may readily be envisaged and is omitted from the figures for clarity.

The forwardmost end of the bale chamber 22 is essentially open. A plunger 23 occupies the interior cross-section of the bale chamber 22 and is constrained to move longitudinally inside the chamber 22 from the open, forward end towards and away from the rear 22b of the bale chamber 22 as signified by arrow A.

The PTO shaft 13 as mentioned may be powered to rotate, in virtually all tractors in a clockwise direction when viewed from behind the tractor 11. PTO shaft 13 is connected by way of at least one, and in practice at least two, universal joint 26 to the forwardmost end of a rotary input shaft 27 of the baling machine 10. The universal joint 26 in a well-known manner accommodates changes in the relative orientation of the tractor 11 and baling machine 10 that result from towing of the baling machine from place to place, e.g. while the baler is working or when it is travelling between fields.

The input shaft 27 is supported e.g. using journal bearings that are omitted from Figure 1 for ease of viewing and connects by way of a driveline, described in more detail below, to a rotatable flywheel 28.

Flywheel 28 is supported on a flywheel shaft 29 that also is supported using journal bearings, or a functionally similar arrangement, that further is omitted from Figure 1. The functions of the flywheel 28 are as described above, although as explained it is possible for the flywheel 28 in embodiments of the invention to be made considerably lighter than some prior art flywheels.

The rear end 29a of the flywheel shaft 29 is a rotary input to a drive converter 31 or similar transmission that by way of intermeshing gear components alters the axis of rotation of rotative energy in the baling machine 10. This drive converter 31 may be referred to as a main transmission in some examples.

The nature of the drive converter 31 thus is such that the longitudinally extending (with reference to the elongate length of the baling machine 10 as illustrated) axis of rotation of the flywheel shaft 29 becomes rotation about a transversely extending axis of a crankshaft 32.

Crankshaft 32 is connected as shown to a crank member 33 that protrudes from the drive converter 31 in a manner presenting a free end 34. The free end 34 is pivotably connected to one end of a conrod 36 the other end of which is pivotably connected, as indicated by numeral 37, to the forward side of the plunger 23.

As is apparent from Figure 1 therefore, rotation of crankshaft 32 causes rotation of crank 33, as signified by arrow B, that gives rise to the rectilinear, reciprocal motion of plunger 23 indicated by arrow A.

In this regard it is somewhat arbitrary whether crank 33 rotates clockwise or anticlockwise, since reciprocal motion of the plunger 23 may in an appropriately designed set of driveline elements be achieved regardless of the direction of rotation of the crank 33. The actual rotational direction of the crank 33 would be a consequence of the internal design of the drive converter 31. Such aspects are not relevant to an understanding of the invention, and therefore are not provided in detail herein.

Charges of plant matter 24 conveyed inside the baling machine 10 from the conveyor 21 repeatedly are at intervals fed by internal components of the baling machine 10, that are omitted from Figure 1 for clarity, into the interior of the bale chamber 22 for compaction by reason of the reciprocal, rectilinear motion (arrow A) of the plunger 23. The feeding of each charge of plant matter 24 is timed to coincide with positioning of the plunger 23 at its retracted, i.e. forwardmost position, with the result that the plant matter 24 becomes compressed and compacted by the movement of the plunger 23 into bale form after it has been fed in to the bale chamber 22.

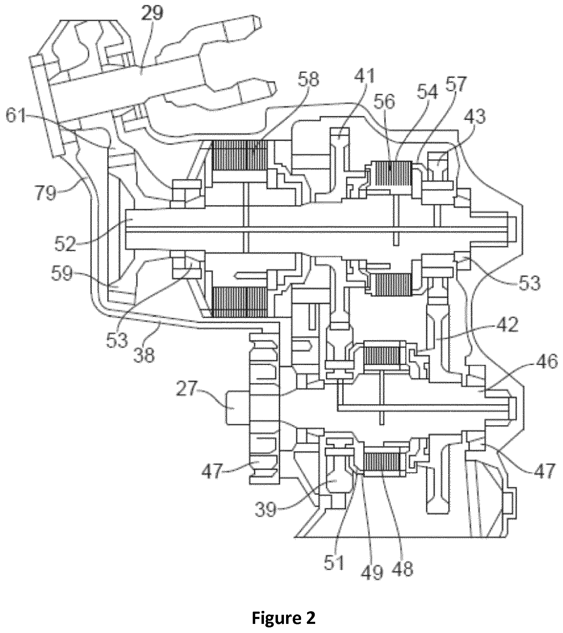

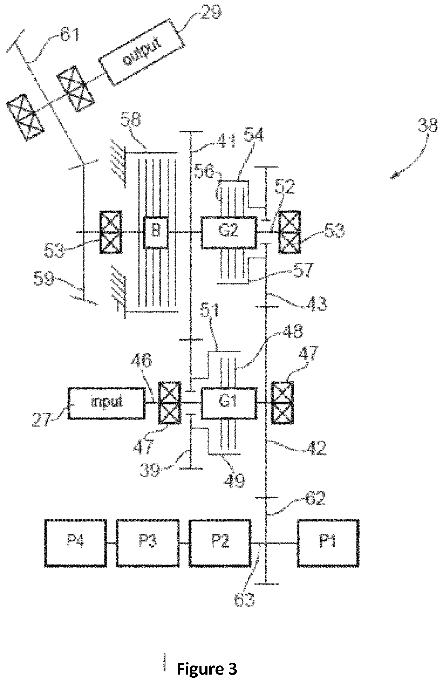

The driveline defined between the input shaft 27 and the flywheel shaft 29 includes a transmission 38 that is described below in relation to Figures 2 and 3.

In Figures 2 and 3 the rotary input shaft 27 connects to respective first and second selectable transmission ratios 39, 41; 42, 43 forming part of a driveline defined by driveline components within the transmission 38 and therefore existing between the input shaft 27 and the drive converter 31.

The first transmission ratio is defined by mutually meshing, rotary, toothed gears 39, 41 that each are supported for rotation within the transmission 38. The first transmission ratio 39, 41 is a relatively great reduction ratio transmission providing a high degree of mechanical advantage.

The second transmission ratio is defined by mutually meshing, rotary, toothed gears 42, 43 that each are supported for rotation within the transmission 38 adjacent the gears 39, 41 in a manner defining a parallel driveline to that represented by first ratio 39, 41. The second transmission ratio 42, 43 is a relatively close reduction ratio transmission providing a higher speed of output shaft rotation than the first transmission ratio.

The baling machine 10 includes a control unit 44 non-limitingly illustrated schematically in Figure 1 in the form of a programmable microprocessor. The baling machine 10 includes a source of electrical power, for the control unit 44, that in preferred embodiments may take the form of a rotary generator that is driven directly or indirectly by the PTO shaft, although other sources of electrical power including batteries and other storage devices, or other types of generator, are possible. Combinations of electrical power sources furthermore are possible.

As indicated the control unit 44 may take a variety of forms and need not be a microprocessor as illustrated, or a single component.

The control unit 44 is capable (typically but not necessarily as a result of software and/or firmware programming) of selectively engaging the first 39, 41 or the second 42, 43 transmission ratio. The arrangement of the components and/or the programming of the control unit 44 prevents the first and second transmission ratios from being selected simultaneously.

As best illustrated in Figures 2 and 3, the input shaft 27 rigidly connects to an input gear shaft 46 that is supported (non-limitingly in the embodiment illustrated by way of journal bearings 47 at either end) for rotational movement inside the transmission 38. Input gear shaft 46 is locked to gear 42 such that gear 42 always rotates with input gear shaft 46.

Input gear shaft 46 is also locked to an input side 48 of first transmission clutch 49 forming part of the driveline. As a result, the input side 48 of first transmission clutch 49 also rotates with the first gear shaft.

First transmission clutch 49 is e.g. electrically or electro-hydraulically activated in the described embodiment, and is selectively engageable under command from the control unit 44. When engaged the output side 51 of the first transmission clutch 49 is locked to the input side 48 and rotates therewith.

The output side 51 of first transmission clutch 49 is locked to gear 39 of first transmission ratio 39, 41 such that gear 39 rotates with the output side 51.

In the illustrated embodiment the first transmission clutch 49 lies on first gear shaft 46 intermediate gears 39 and 42, but as will occur to the person of skill in the art this need not be the case, and other clutch and gear position combinations are possible.

As explained gears 42 and 43 are mutually meshed, with gear 43 supported on rotational intermediate gear shaft 52. Intermediate gear shaft 52 is supported (in the non-limiting example shown by way of journal bearings 53 at either end) for rotation relative to the remainder of transmission 38.

By reason of locking of input gear shaft 46 to gear 42, gear 43 rotates whenever input gear shaft 46 rotates, at a speed, relative to the speed of input gear shaft 46, determined by the gear tooth ratio between gears 42 and 43. However, gear 43 merely idles unless a second transmission clutch 54, which may be of a similar design to first transmission clutch 49 and hence operable under command of the control unit 44, is engaged.

In this respect intermediate gear shaft 52 is locked to an input side 56 of second transmission clutch 54; and an output side 57 is locked to gear 43. As a result, when the clutch is engaged rotation of gear 43 is transmitted via intermediate gear shaft 52.

Gear 39 is meshed with gear 41 as explained. Gear 41 is locked to intermediate gear shaft 52. Clearly therefore to avoid locking up of the transmission it is essential that only one of the transmission clutches 49, 54 is engaged at a time. When the first transmission clutch 49 is engaged and the second transmission clutch 54 is disengaged, drive from the input shaft 27 is transmitted via meshed gears 39 and 41 to drive intermediate gear shaft 52 in accordance with the first, reduction transmission ratio "G1" determined by the numbers of teeth of gears 39 and 41. At this time gears 42 and 43 rotate in an idling manner.

When first transmission clutch 49 is disengaged and second transmission clutch 54 is engaged the drive of the input shaft 27 is transmitted via gears 42 and 43 to drive intermediate gear shaft 52 in accordance with the relatively second transmission ratio "G2" determined by the numbers of teeth of gears 42 and 43.

As explained herein, the first transmission ratio G1 is a reduction ratio in which the speed ratio exceeds 1. This provides a beneficial mechanical advantage when moving the flywheel 28 from rest. The second transmission ratio G2 is an accelerative ratio the speed ratio of which is a value less than 1. This causes rotation of the flywheel shaft 29 to be at a higher speed than that of the PTO shaft 13.

It is possible for both the clutches 49, 52 to be disengaged simultaneously. In that case gears 42 and 43 would rotate, but no drive would be transmitted to intermediate gear shaft 52.

Intermediate gear shaft 52 includes mounted thereon an optional brake 58 that may be employed when both the transmission clutches 49, 52 are disengaged to slow the flywheel shaft 29. The latter receives the rotary drive of intermediate gear shaft 52, when one of the transmission clutches 49, 54 is closed, via meshed output gears 59, 61.

The numbers of teeth of the gears 39, 41, 42, 43, 59 and 61 may be varied extensively in all the gears of the transmission 38 depending on the precise design of the transmission 38. The overall numbers of drive-transferring components in the transmission may be varied. Also as explained the driveline elements defining the transmission ratios need not be meshing, toothed gears and instead may adopt a range of other forms, including but not limited to the examples given above.

Gear 42 as illustrated in Figure 3 may optionally additionally mesh with an auxiliary drive gear 62 that also may be supported in the transmission 38 to co-rotate with input gear shaft 46 in accordance with a transmission ratio determined by the relative numbers of teeth of gears 42 and 62.

Gear 62 is locked to an auxiliary drive shaft 63 that is supported e.g. in journal bearings for rotation with gear 62. Auxiliary drive shaft can be connected to drive one or more hydraulic pumps P1, P2, P3, P4 that may be used to energise one or more hydraulic circuits that are not shown in the drawings hereof. Such circuits may control the operation of a range of actuators that perform auxiliary functions in the baling machine 10. An example of such an actuator is hydraulic actuator 64 described below.

The transmission clutches 49 and 54 may be for example electrically (e.g. solenoid) operated, electro-mechanically operated or electro-hydraulically operated, under the control of the control unit 44. Preferably but not essentially the transmission clutches 49, 54 are spooled wet clutches the nature of which is familiar to the person of skill in the art and therefore does not require describing in detail herein. Wet clutches generally are highly suitable for computer or other electronic control, leading to rapid clutch engagement and disengagement.

Figure 3 shows that the clutches 49, 54 each have the same number of plates in the illustrated embodiment, but this need not be the case. Unequal numbers of clutch plates therefore are possible.

One form of control of the transmission clutches 49, 54 is illustrated schematically by electrical control signal line 66 that transmits commands from the control unit 44 to first transmission clutch 49; and control line 67 that transmits commands from the control unit 44 to second transmission clutch 54.

Two-way communication between the transmission clutches 49, 54 and the control unit 44 optionally is possible, either using the signal lines 66, 67 or by another means. Using two-way control the transmission clutches 49, 54 can signify e.g. their operational (i.e. engaged or disengaged) status, information on the condition of wear parts such as friction plates, levels of clutch fluid in the event of the clutches being wet clutches as is preferred and similar operational variables. The control unit 44 can generate commands and/or warning signals in dependence on the signals received from the transmission clutches 49, 54.

The control unit 44 determines the transmission ratio to be selected in dependence on conditions prevailing in the baling machine, as described in more detail below. To this end the baling machine 10 includes a number of sensors, as described in the following, for sensing the conditions of one or more parts of the driveline and operatively connected to the control unit 44. The control unit 44 operates in dependence on the outputs of the one or more sensors.

As explained, it is strongly desirable to reduce or preferably eliminate slip of any clutches, such as clutches 49, 54, forming part of the driveline between the input shaft 27 and the flywheel shaft 29. Sensing of slip in the clutches and transmitting output signals, indicating the degree of slip, to the control unit 44, can therefore be provided for in the baling machine 10.

One way of sensing slip is to sense the rotational speeds of the input shaft 27 and flywheel shaft 29, and compare the sensed speeds (adjusting for the effective prevailing transmission ratio engaged by way of the transmission 38). To this end a first rotational speed sensor 68 senses the speed of input shaft 27 and generates a signal proportional thereto. This signal preferably is transmitted via electrical signal line 69 to the control unit 44, although other means of signal generation and transmission (including wireless methods) are possible.

A second rotational speed sensor 71 senses the speed of flywheel shaft section 29a and generates a signal proportional thereto. This signal can be referred to as an output-shaft-speed signal, and in this example is transmitted via electrical signal line 72 to the control unit 44. As in the case of the first sensor 68, other signal generation and transmission options are possible. Calibration and subtraction of the speed signals from one another gives rise to a slip signal that is proportional to the degree of slip in the clutch 49 or 52 that is engaged at the time of sensing.

When one or more transmission clutches forming part of the driveline of the baling machine 10 is a wet clutch as is preferred, a clutch fluid flow circuit is provided. This conveys clutch fluid via the clutches, thereby giving rise to fluid *"upstream"* and *"downstream"* sides of the clutches in the fluid flow circuit. It is possible to sense the temperature of oil in the flow circuit and use this as an indication of clutch slip. For the most accurate fluid temperature-based indication of clutch slip the temperature is sensed immediately downstream of the clutches.

To this end the baling machine 10 optionally includes one or more temperature sensors for one or more of the clutches as schematically represented by numeral 73 and connected to the control unit 44 via electrical signal line 74 (or by another signal transmission means, including but not limited to wireless connection). The temperature sensor 73 is arranged as stated to measure the temperature of a fluid, such as the oil of a wet clutch, in a flow circuit forming part of the transmission 38. The sensor 73 generates signals indicative of the sensed temperature and these when received by the control unit 44 can be used to indicate whether slip is occurring in the clutch in question.

A temperature-based slip indication signal can be used in its own right to indicate slip, or it may be used to augment another slip indication such as a shaft speed comparison as described above. A temperature signal also can be used for example to help determine a recovery delay following overloading of the transmission 38.

Thus if for example slip of a clutch in the transmission 38 causes the temperature of clutch oil to rise this will be sensed by the temperature sensor 73 and a clutch rapid disengagement routine called. The control unit 44 then can call a routine that delays re-engagement of the clutch in question for a calculated or predetermined recovery period. Alternatively the control unit 44 can command repeated sampling of the oil temperature using the sensor 73 until the temperature is below a threshold value, with re-engagement of the clutch being inhibited until such a temperature is attained.

Although a single temperature sensor 73 is illustrated, this is purely to exemplify the described embodiment. Plural numbers of temperature sensors are possible and indeed likely bearing in mind the plural number of clutches provided.

As is apparent from the foregoing description, the transmission 38 includes two drive transfer paths (respectively via the first transmission ratio 39, 41 (G1) and the second, transmission ratio 42, 43 (G2)) having a common output in the form of the output gears 59, 61 and the flywheel shaft 29, and of which only one drive transfer path at a time is connected in the transmission. Also as is apparent there is provided a respective clutch 49, 54 controlling whether each drive transfer path is engaged.

The sensor arrangement 68, 71 for sensing slip is capable of sensing slip in either of the drive transfer paths and hence in either of the clutches 49, 54, depending on which of them is engaged. This is so notwithstanding that sensors 68, 71, measuring the rotational speed of the input shaft 27 and the flywheel shaft 29, indicate slip in the two drive transfer paths in common.

As also is apparent from the foregoing, the control unit 44 is capable of selectively disengaging rotary drive between the input shaft 27 and the shaft 29 supporting the flywheel 28. This possibility is explained further below in connection with operational sequences made possible by the apparatus of the invention.

In this regard a preferred operational method of the baling machine 10 is for the control unit 44 initially to command engagement of the first transmission ratio 39, 41 during starting up of the baling machine 10, when the flywheel 28 is normally at rest. At such a time a maximal force is required to initiate movement of the plunger 23, especially if the plunger 23 starts from a position in the bale chamber 22 giving rise to an adverse transmission angle of the conrod 36 relative to the crank 33. Resistance of the plunger 23 to movement also may for various reasons vary from place to place along the bale chamber with the result that certain plunger positions may give rise to a very high overall resistance to motion.

Engagement of the first, transmission ratio 39, 41 (G1) ameliorates the high resistance problem, by providing a drive transfer path associated with a large mechanical advantage. As a result it is expected that the output of the tractor PTO 12 can be well matched to the load requirement represented by the flywheel and plunger combination 28, 23. It further is expected therefore that initiation of movement of the plunger 23 will reliably be achieved in normal circumstances, essentially regardless of the maximum output of the tractor PTO 12.

Driving of the flywheel 28 by way of the first transmission ratio permits the speed at which the plunger 23 reciprocates to increase from rest to an intermediate speed that is less than the normal operational speed. Once the intermediate speed is reached the control unit 44 then commands disengagement of first transmission clutch 49, thereby disengaging first transmission ratio 39, 41; and engagement of second transmission clutch 54. The latter step causes engagement of the second, close reduction transmission ratio 42, 43 (G2). This permits further acceleration of the flywheel 28 to its operational speed.

The intermediate speed may be programmed into the control unit 44. In the event of the controller being non-programmable a permanent logic regime (as may be provided by e.g. Op Amps or hydraulic logic circuits) may be employed, instead of a programmable logic, to effect the indicated transmission shift from the first to the second transmission ratio.

Once the flywheel 28 has been accelerated to its operational speed the energy required under normal circumstances to maintain the operational speed peaks at a considerably lower level than is required during acceleration of the flywheel 28.

The foregoing means that the baling machine 10 is capable of successful operation even if the power or torque output of the tractor PTO 12 is less than would otherwise be required in a prior art baling machine to move the flywheel 28 from rest and accelerate it to its operational speed. This is chiefly because in an early phase of acceleration of the flywheel 28 the first ratio 39, 41 is engaged and the mechanical advantage this provides means even a low power or torque output PTO acceptably is matched to the flywheel energy requirement.

Furthermore the two-stage acceleration regime made possible by the baling machine 10 described herein means that the flywheel 28 can be made lighter than in some prior art baling machines, since its role in smoothing the application of power to the plunger 23 during acceleration of the latter from rest is reduced compared with the prior art. As a consequence in one embodiment the mass of the flywheel can be reduced from approximately 600 kg to approximately 320 kg.

This has a clear benefit in terms of fuel consumption of the tractor required to tow and power the baling machine 10. Further benefits arise in terms of the cost, energy and material requirements during manufacturing of the baling machine 10.

In Figure 1 an input device 77 is shown in the form of a touchscreen connected to the control unit 44 via an electrical cable 78, and using which e.g. the rated power output of the tractor 11 can be input to the baling machine 10. The control unit 44 can select a set of decision parameters (such as the preferred speed of plunger 23 at which to transition from the first transmission ratio 39, 41 to the second transmission ratio 42, 43) that are optimised for the input power level.

The input device 77 can also be used by an operator to initiate a start-up routine. For instance, the input device 77 may be located in the cab of the tractor 11 such that an operator can press a button to start-up the baler once the tractor engine is up to a desired speed. In this way, the control unit 44 can receive a start-up-routine-signal in response to user input. Alternatively, the control unit 44 can automatically receive a start-up-routine-signal in response to the engagement of the PTO, or automatically in response to signals provided by the agricultural work vehicle (e.g. the tractor) when the operator starts the work vehicle's engine.

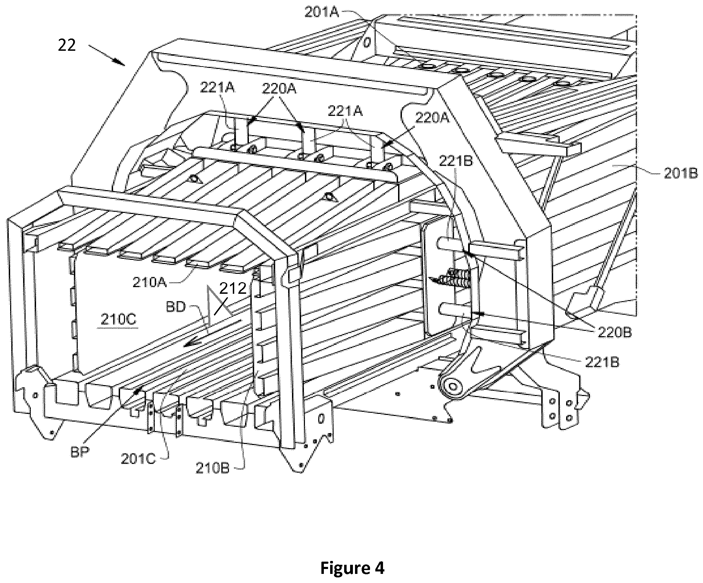

Referring now to Figure 4, a perspective view of the bale chamber 22 is illustrated. The bale chamber 22 generally includes a plurality of stationary walls, which may include a top wall 201A, a pair of opposed side walls 201B, and a stationary bottom wall 201C opposite the top wall 201A. As the bale flows through the bale chamber 22 in a bale forming direction, which is designated by arrow BD, the bale encounters movable density doors 210A, 210B, 210C. In some embodiments, the movable density door 210A is a top density door that is pivotably coupled to a stationary part of the baling chamber 26 so as to form the top wall 201A and the movable density doors 210B and 210C are a pair of side density doors that are each pivotably coupled to a stationary part of the baling chamber 26 so as to form respective side walls 201B. A bale pressing area BP is defined between the density doors 210A, 210B, 210C and the stationary bottom wall 201C where the density doors 210A, 210B, 210C exert a pressure on a bale. The pressure exerted on the bale by the density doors 210A, 210B, 210C holds the bale in place as the plunger 30 compresses the wads of crop into flakes. A greater pressure exerted on the bale by the density doors 210A, 210B, 210C, therefore, results in a more densely packed bale that exits the bale chamber 22.

To adjust the size of the bale pressing area BP, and thus the pressure exerted on the bale by the density doors 210A, 210B, 210C, at least one actuator, e.g. at least one fluid cylinder 220A, 220B, is provided to move the density doors 210A, 210B, 210C. In the illustrated embodiment, the top density door 210A is moved by three fluid cylinders 220A and each of the side density doors 210B, 210C is moved by two fluid cylinders 220B. Each of the fluid cylinders 220A, 220B includes a cylinder rod 221A, 221B that is configured to move one of the density doors 210A, 210B, 210C, as will be described further herein. In some embodiments, the fluid cylinders 220A, 220B are hydraulically powered cylinders supplied with, for example, pressurized oil to extend and retract the cylinder rods 221A, 221B. It should be appreciated that the fluid cylinders 220A, 220B may be powered by fluids other than oil, such as other incompressible fluids, in accordance with the present disclosure.

When the fluid cylinders 220A, 220B are extended, the respective density doors 210A, 210B, 210C are pivoted towards each other to reduce the size of the bale pressing area BP. This movement of the density doors towards each other may also be referred to as "closing" the density doors. When the fluid cylinders 220A, 220B are retracted, the respective density doors 210A, 210B, 210C are pivoted away from each other to increase the size of the bale pressing area BP. This movement of the density doors away from each other may also be referred to as "opening" the density doors.

A bale length sensor may be provided in the bale chamber 22 to continuously or intermittently determine the length of the bale being formed in the bale chamber 22. In the embodiment of Figure 4, the bale length sensor is a star-wheel 212, extending through the bottom wall 201C of the bale chamber 22. Only a single sprocket of the star-wheel 212 is shown in the bale chamber 22 of Figure 4. As the bale is pushed through the bale chamber 22, the bale engages the sprockets of the star-wheel 212 and thus moves the sprockets of the star-wheel 212 in the baling direction BD. Movement of the sprockets causes a rotation of the star-wheel that is directly proportional to an extension (e.g. the length) of the bale within the baling chamber.

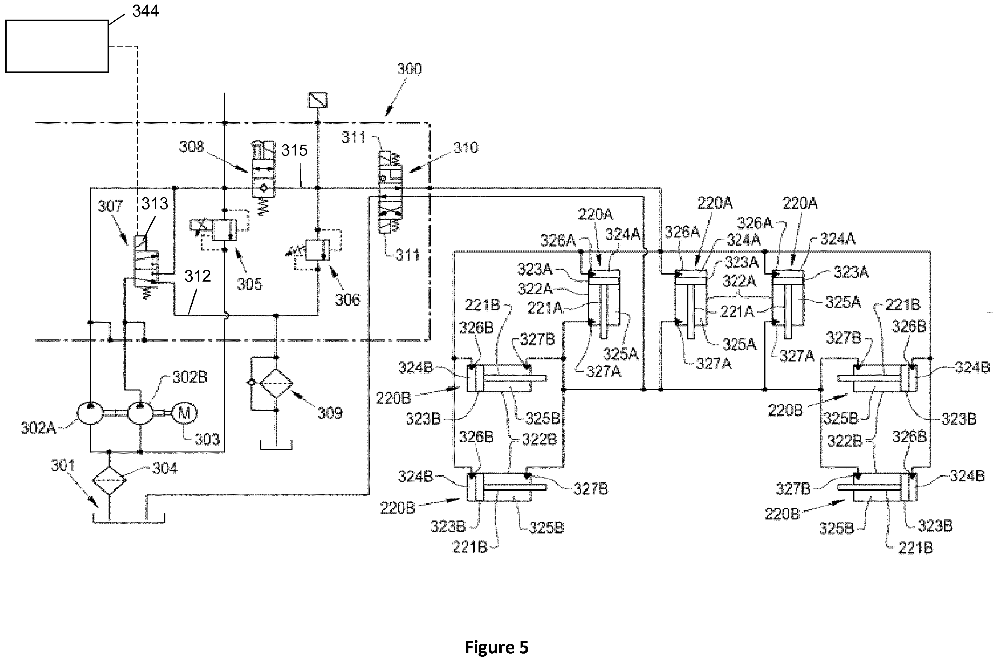

Referring now to Figure 5, a schematic view is provided that illustrates a fluid supply circuit 300 fluidly coupled to the fluid cylinders 220A, 220B to supply working fluid to the fluid cylinders 220A, 220B. Each of the fluid cylinders 220A, 220B includes a respective fluid chamber 322A, 322B and a piston 323A, 323B disposed in the fluid chamber 322A, 322B. The pistons 323A, 323B separate the fluid chambers 322A, 322B into respective piston sides 324A, 324B and rod sides 325A, 325B, with the cylinder rods 221A, 221B each coupling to a respective piston 323A, 323B on the rod side 325A, 325B of the fluid chamber 322A, 322B. Each of the fluid cylinders 220A, 220B includes a piston fluid port 326A, 326B that fluidly couples the piston side 324A, 324B of the fluid chamber 322A, 322B with the fluid supply circuit 300. Each of the fluid cylinders 220A, 220B also includes a rod fluid port 327A, 327B that fluidly couples the rod side 325A, 325B of the fluid chamber 322A, 322B with the fluid supply circuit 300.

The fluid supply circuit 300, which may be part of or connected to a main fluid circuit of the baler 10, is configured to supply working fluid to the fluid chambers 322A, 322B of the fluid cylinders 220A, 220B to extend or retract the cylinder rods 221A, 221B and move the density doors 210A, 210B, 210C. The fluid supply circuit 300 may include a fluid reservoir 301, which may be filled with a working fluid such as water or oil. In the example of Figure 5, two pumps 302A, 302B are fluidly coupled to the fluid reservoir 301. The two pumps 302A and 302B are driven by a common prime mover, e.g. a motor 303, to pressurize and drive fluid through the fluid supply circuit 300. The two pumps, of this example, are uni-directional pumps.

A first pump 302A is permanently connected to a pressurised fluid line 315 of the fluid supply circuit 300. A second pump 302B is selectively connectable to the pressurized fluid line 315 of the fluid supply circuit 300, via a fluid flow control module. In the example of Figure 5, the fluid flow control module is a directional control valve 307. The directional control valve 307 is provided for selectively supplying additional fluid flow generated by the second pump 302B to the pressurised fluid line 315 by way of switching the directional control valves between its two positions, which will be explained in more detail below. Of course, the fluid flow control module for selectively combining the fluid flow of the two pumps 302A, 302B may also be embodied in any other suitable way.

In some embodiments, a suction screen 304 is disposed between the fluid reservoir 301 and the pumps 302A, 302B. The fluid supply circuit 300 may include a manually adjustable pressure relief valve 306 to lessen the risk of excessive pressure developing in the fluid supply circuit 300. A pressure control module 305 is provided in the fluid supply circuit 300 to determine the pressure in a pressurised fluid line 315 and thus, ultimately, the pressure/force acting on the density doors. In some embodiments, the pressure control module 305 is a proportional relief valve defining a working range of fluid pressures that are supplied to the fluid cylinders 220A, 220B. The working range includes a minimum working fluid pressure, which is the minimum fluid pressure value that the fluid supply circuit 300 is configured to supply to the fluid cylinders 220A, 220B, and a maximum working fluid pressure, which is the maximum fluid pressure value that the fluid supply circuit 300 is configured to supply to the fluid cylinders 220A, 220B.

A load holding valve 308 is arranged to maintain the pressure in the pressurised fluid line 315 if the one or more fluid cylinders 220A, 220B are stationary. The load holding valve 308 may be manually and/or automatically switchable to selectively relief pressurised fluid in the pressurised fluid line 315. The fluid supply circuit 300 may also include one or more filters 309 to capture contaminants that are entrained in the fluid flow. It should be appreciated that the fluid supply circuit 300 may incorporate additional and/or different elements than those previously described, depending on the operating requirements.

The fluid supply circuit 300 also includes a fluid supply controller 310 that is configured to control the supply of fluid from the fluid supply circuit 300 to the fluid cylinders 220A, 220B. The fluid supply controller 310 of the example shown in Figure 5 is a 4/3-way directional control valve. However, it will be appreciated that the fluid supply controller 310 may also be designed as any other suitable fluid control assembly, such as an arrangement of two 3/2-way valves. The fluid supply controller 310, which may be mechanically or electrically controlled, is selectively switchable to selectively connect the pressurised fluid line 315 of the fluid supply system 300 with either one or both of the piston sides 324A, 324B and the rod sides 325A, 325B of the fluid cylinders 220A, 220B. The fluid supply controller 310 may switch the fluid supply system 300 by, for example, one or more solenoid 311 of the fluid supply controller 310. When the fluid supply controller 310 is in the position shown in Figure 5, pressurised working fluid is only provided to the piston sides 324A, 324B of the fluid chambers 322A, 322B of the fluid cylinders 220A, 220B through the piston fluid ports 326A, 326B. In some embodiments, the fluid cylinders 220A, 220B are all fluidly coupled to the fluid supply circuit 300 in parallel, so a fluid pressure of working fluid supplied to the fluid chambers 322A, 322B from the fluid supply circuit 300 is generally the same for all of the fluid cylinders 220A, 220B.

Supplying the working fluid only to the piston sides 324A, 324B of the fluid chambers 322A, 322B urges the pistons 323A, 323B toward the respective density doors 210A, 210B, 210C to extend the cylinder rods 221A, 221B and move the density doors 210A, 210B, 210C together, i.e., close the density doors 210A, 210B, 210C. Fluid on the rod sides 325A, 325B of the fluid chambers 322A, 322B, on the other hand, is urged out of the fluid chambers 322A, 322B towards, for example, the fluid reservoir 301. This can be referred to as a first fluid supply mode. As the density doors 210A, 210B, 210C move together, the bale pressing area BP decreases in size, causing the density doors 210A, 210B, 210C to exert a greater pressure on bales in the bale pressing area BP. Simultaneously, the exit space for the bale to move through decreases, which makes it harder for the bale to slide through to the back 32 of the baler. So, applying more pressure on the sides of the formed bale, and simultaneously decreasing the exit space for the bale, will increase the density of the formed bales. In this respect, the first fluid supply mode may be referred to as a "high pressure" mode due to the relatively high pressure that the density doors 210A, 210B, 210C exert on the bales when the fluid supply circuit 300 is in the first fluid supply mode. It should be appreciated that the pressure exerted on the bales in the bale pressing area BP by the density doors 210A, 210B, 210C correlates with the pressure of the working fluid that is supplied to only the piston sides 324A, 324B of the fluid chambers 322A, 322B, i.e. a greater working fluid pressure supplied to only the piston sides 324A, 324B corresponds to a greater pressure exerted on the bales by the density doors 210A, 210B, 210C.

When the fluid supply controller 310 is transferred to a second position (e.g. the valve is pushed down in Figure 5, pressurised working fluid is supplied to both the piston sides 324A, 324B and the rod sides 325A, 325B of the fluid chambers 322A, 322B. This can be referred to as a second fluid supply mode. The fluid pressure on the piston sides 324A, 324B of the fluid chambers 322A, 322B produces extension forces on the pistons 323A, 323B that urge the coupled cylinder rods 221A, 221B to extend, i.e., close the density doors 210A, 210B, 210C. The fluid pressure on the rod sides 325, 325B of the fluid chambers 322A, 322B, on the other hand, produces retraction forces on the pistons 323A, 323B that urge the coupled cylinder rods 221A, 221B to retract, i.e., open the density doors 210A, 210B, 210C. If the produced extension forces are greater than the retraction forces, the cylinder rods 221A, 221B will still extend to close the density doors 210A, 210B, 210C, but the net force extending the cylinder rods 221A, 221B will be equal to the extension forces minus the retraction forces. If, however, the produced retraction forces are greater than the extension forces, the cylinder rods 221A, 221B will retract to open the density doors 210A, 210B, 210C. In this sense, the fluid cylinders 220A, 220B are dual acting fluid cylinders that can be supplied with working fluid pressure on either side 324A, 324B, 325A, 325B of the pistons 323A, 323B to control extension and retraction of the cylinder rods 221A, 221B.

In the embodiment of Figure 5, the fluid pressure on the piston side 324A, 324B is the same as the fluid pressure on the rod side 325A, 325B of the fluid chambers 322A, 322B, when the fluid supply controller 310 is in the second position. Even though the fluid pressures on the sides 324A, 324B, 325A, 325B may be equal, the cylinder rods 221A, 221B will still be urged to extend when the fluid supply circuit 300 is in the second fluid supply mode. However, the net extension forces that urge the cylinder rods 221A, 221B to extend and close the density doors 210A, 210B, 210C will be relatively small compared to the extension force produced when the fluid supply controller 310 is in the first position shown in Figure 5. The net extension forces on the pistons 323A, 323B when the fluid supply controller 310 is in the second fluid supply mode may be, for example, equal to the product of the working fluid pressure supplied to the fluid cylinders 220A, 220B and a surface area of the pistons 323A, 323B covered by the cylinder rods 221A, 221B.

Although in the embodiment described with reference to Figure 5, the pressure of the hydraulic fluid supplied to the rod sides 325A, 325B and piston sides 324A, 324B of the fluid cylinders 220A, 220B are equal, other embodiments may comprise providing hydraulic fluid of unequal pressure to the opposite sides of the fluid cylinders 220A, 220B.

In some embodiments, the fluid supply controller 310 is switchable to a third position (e.g. the valve is shifted up in Figure 5). In this third position of the fluid supply controller 310, the fluid supply circuit 300 is configured to supply working fluid to only the rod sides 325A, 325B of the fluid chambers 322A, 322B when the fluid supply circuit 300 is in the third fluid supply mode. Thus, the cylinder rods 221A, 221B are urged to retract, without a significant counteracting extension force, when the fluid supply circuit 300 is in the third fluid supply mode to fully open the density doors 210A, 210B, 210C and create a maximum size of the bale pressing area BP.

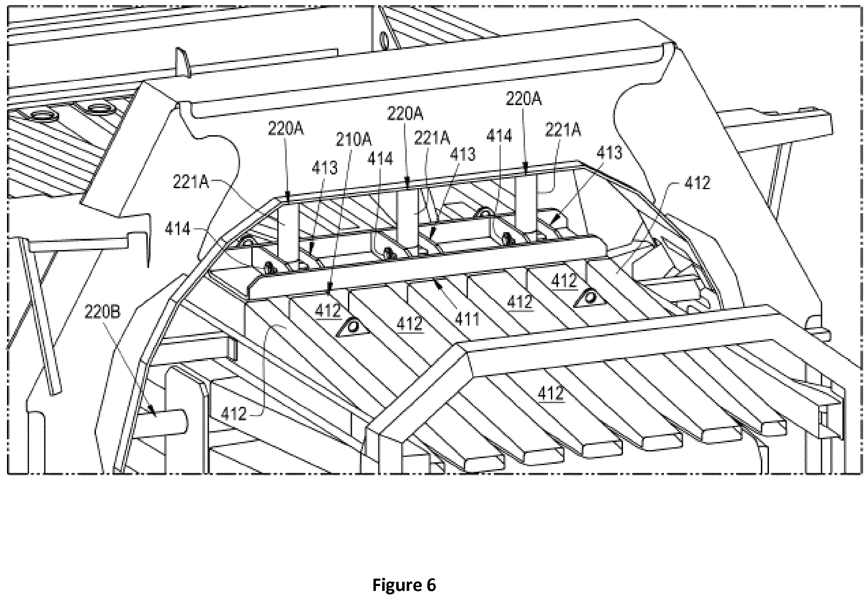

Referring now to Figure 6, it is illustrated how the fluid cylinders 220A move the top density door 210A. As can be seen, the top density door 210A may include a U-shaped channel 411 that is connected to girders 412 of the top density door 210A. The cylinder rods 221A of the fluid cylinders 220A may each be coupled to a fastening region 413 of the U-shaped channel 411 by fasteners such as, for example, bolts 414. By coupling the cylinder rods 221A of the fluid cylinders 220A to the U-shaped channel 411 via the bolts 414, extension and retraction of the cylinder rods 221A can move the top density door 210A to adjust the size of the bale pressing area BP.

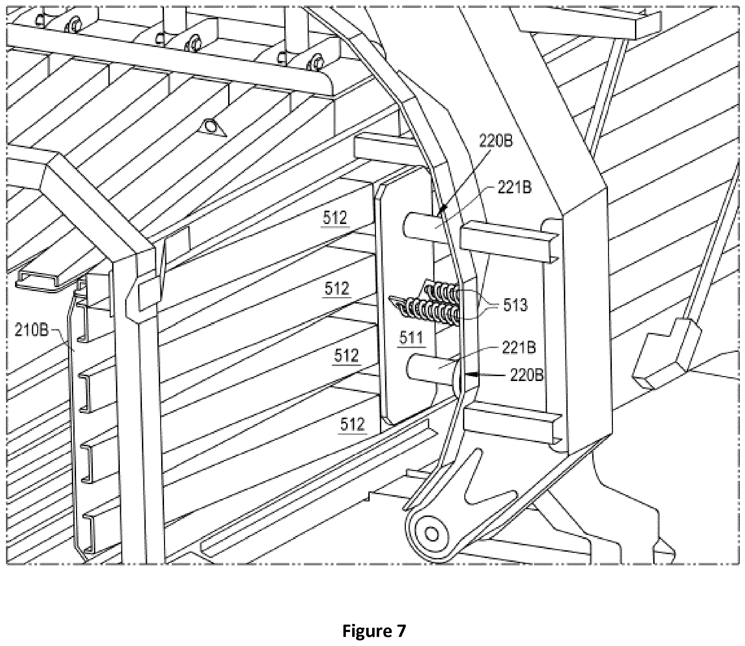

Referring now to Figure 7, it is illustrated how the fluid cylinders 220B move one of the side density doors, such as the side density door 210B. In the illustrated embodiment, a clearance between the side density door 210B and surrounding elements is not great enough to allow attachment of a U-shaped channel for connecting the fluid cylinders 220B to the side density door 210B by a fastener. Instead, the side density door 210B includes a bearing plate 511, which may be attached to girders 512 of the side density door 210B. The cylinder rods 221B of the fluid cylinders 220B bear on the bearing plate 511 so extension of the cylinder rods 221B moves the side density door 210B toward the other side density door 210C to decrease the bale pressing area BP. However, the cylinder rods 221B of the fluid cylinders 220B are not fastened to the bearing plate 511, so retraction of the cylinder rods 221B does not tend to retract the side density door 210B. In order to retract the side density door 210B to open the side density door 210B, one or more springs 513, illustrated as a pair of tension springs, is coupled to the side density door 210B, such as to the bearing plate 511. When the cylinder rods 221B are urged to extend, the cylinder rods 221B overcome retraction forces of the tension springs 513 to extend and push on the bearing plate 511 to move the side density door 210B. When the cylinder rods 221B are urged to retract, the retracted cylinder rods 221B no longer overcome the retraction forces of the tension springs 513 acting on the side density door 210B, allowing the tension springs 513 to move and open the side density door 210B. Thus, the cylinder rods 221B can close the side density door 210B while the tension springs 513 can open the side density door 210B, allowing both closing and opening movements of the side density door 210B in an area with little clearance between elements. It should be appreciated that while the manner of moving side density door 210B by fluid cylinders 220B and tension springs 513 is illustrated in Figure 7, the other side density door 210C may be moved by fluid cylinders 220B and tension springs 513 in a similar manner.

In other examples, a similar system as used to move the top density door 210A can be used to move the side density doors 210B and 210C. Likewise, a similar system as used to move the side doors 210B and 210C can also be used to move the top density door 210A.

A control unit 344, which is associated with the agricultural baler may be connected to the directional control valve 307 to move the directional control valve 307 between its first and second positions, explained above. To this end, the control unit 344 may be connected to a solenoid actuator 313. In the example shown in Figure 5, the directional control valve 307 is biased into its first position, such that the fluid cylinders 220A, 220B will operate in a first-actuator-speed-mode (for instance using hydraulic fluid flow provided by only one of the parallel pumps 302A, 302B, which can be a "normal actuation mode") by default, i.e. for as long as the solenoid 313 is not energised. By energising the solenoid 313 the control unit 344 may switch the fluid cylinders 220A, 220B from the first-actuator-speed-mode into a second-actuator-speed-mode (for instance using hydraulic fluid flow provided by both of the parallel pumps 302A, 302B) to selectively increase the actuator speed.

The agricultural baler and the control unit together are considered as part of an agricultural system. It will be appreciated that the control unit 344 is only schematically represented in the hydraulic scheme of Figure 5. The control unit 344 is associated with the baler, which does not mean that the control unit 344 is necessarily part of the baler implement shown in Figure 1. Rather, the control unit may be a part of the agricultural work vehicle (e.g. a tractor) and be connected to the directional control valve 307 of the agricultural baler by electrical wiring or wirelessly. In other embodiments, the control unit 344 may be provided remotely, e.g. at the farm control site, and communicate remotely with the agricultural baler and/or the work vehicle to switch the directional control valve 307 shown in Figure 5.

Problems can arise during start-up if an amount of crop material that is already present in the bale chamber resists movement of the plunger 23 in the bale chamber 22 such that the plunger 23 cannot reach its full extension into the bale chamber 22. This can result in the crank member 33 being unable to complete a full rotation, and therefore can in turn resist the rotation of the crankshaft 32. As discussed above, the drive converter 31 converts rotation of the flywheel shaft 29 into rotation of the crankshaft 32. The flywheel shaft 29 can also be referred to as an output shaft of the transmission 38. It will be appreciated that any resistance to the rotation of the crankshaft also resists the rotation of the output shaft 29 of the transmission 38. As discussed above, the transmission 38 can include one or more clutches 49, 54. Therefore, the resistance to the rotation of the output shaft 29 can result in undesirable slipping of the clutch. Slipping of the clutch can cause a very rapid temperature increase in the parts of the clutch. This gives rise to premature failure of the friction material of the clutch plates, with clutch burn-out sometimes occurring just a few seconds (e.g. 1 - 5 seconds) after engagement of rotary drive in the PTO shaft.

Clutch burn-out of this kind is highly inconvenient, as a minimum requiring replacement of part or all of the clutch. It may be necessary to wait a lengthy period after burn-out has occurred until the parts of the clutch are cool enough to be handled during replacement. The location of the clutch parts may mean that substantial dismantling of the baling machine is necessary before the clutch can be replaced. The friction plates and parts connected to them may be distorted or welded together in ways making their replacement difficult and time-consuming.

Even if the clutch does not burn out as a result of excessive slip, such a phenomenon shortens the service life of the clutch and presents a significant fire risk (for example in the event of dry plant matter or other combustible material such as hydraulic fluid coming into contact with overheated clutch or other driveline parts). A fire in a baling machine typically presents a serious risk to the safety of personnel nearby and a risk of damage to other machinery such as a towing tractor.

Also such an event nearly always results in the burning of valuable plant matter lying in a field; and since baling machines frequently operate in locations removed from public roads it can be difficult for fire tenders to provide assistance.

Referring back to Figures 1 and 4, the control unit 44 receives **a routine-**trigger-signal. As discussed above a start-up-routine-signal can be automatically generated, or can be generated in response to user input. The routine-trigger-signal that is received by the control unit 44 is the same as the start-up-routine-signal.

In some examples, the control unit 44 can automatically generate a routine-trigger-signal based on a clutch-engagement-signal. Such a clutch-engagement-signal can represent the degree with which a clutch in the transmission 38 has been engaged. The clutch-engagement-signal can be provided by a suitable sensor that measures the engagement of the clutch, such as a sensor that measures the pressure of clutch fluid. Alternatively, the clutch-engagement-signal can be provided by a control unit (which may or may not be the same as the control unit 44 that is shown in Figure 1) that is used to control the clutch engagement. In this way, the clutch-engagement-signal can represent a clutch-control-signal that is provided to the clutch to control its operation. The routine-trigger-signal may be automatically generated in response to the clutch-engagement-signal exceeding a clutch-engagement-threshold. The clutch-engagement-threshold may represent a predetermined amount of clutch engagement, such as 70%, 80% or 90% as non-limiting examples. So, in one example, the routine-trigger-signal can be automatically generated in response to the clutch-engagement-signal exceeding 80% clutch engagement. When the clutch-engagement-threshold is exceeded, this can be representative of the clutch being sufficiently engaged such that the output shaft 29 of the transmission can be expected to have at least some rotational speed.

The control unit receives an output-shaft-speed-signal, which is representative of the rotational speed of the output shaft 29. In some examples, a sensor can be used to directly measure the rotational speed of the output shaft 29 in order to provide the output-shaft-speed-signal. In other examples, a sensor can be used to measure the rotational speed of the flywheel 28 as a flywheel-speed-signal, and provide the output-shaft-speed-signal based on the flywheel-speed-signal. In some implementations, the flywheel 28 may be fixedly engaged with the output shaft 29 such that the output-shaft-speed-signal can be identical to the flywheel-speed-signal. In another implementation, the flywheel 28 may be selectively engageable and disengageable from the output shaft 29. In such implementations the control unit 44 can also receive a flywheel-engagement-signal which can indicate whether or not (and optionally to what extent) the flywheel 28 is engaged with the output shaft 29. Therefore, the control unit 44 may determine the output-shaft-speed-signal based on: (i) the flywheel-speed-signal; and (ii) the flywheel-engagement-signal. For instance, the control unit may determine the output-shaft-speed-signal as the flywheel-speed-signal only when the flywheel-engagement-signal satisfies a flywheel-engagement-threshold, such as 90% engaged or 100% engaged as non-limiting examples.

In response to receiving the routine-trigger-signal, the control unit 44 compares the output-shaft-seed-signal with one or more threshold conditions, in order to determine whether or not the output-shaft-seed-signal satisfies the one or more threshold conditions. The control unit 44 can perform this comparison directly in response to receiving the routine-trigger-signal, for example immediately after receiving the routine-trigger-signal. Alternatively, the control unit 44 can perform this comparison at an instant in time that is spaced apart from receiving the routine-trigger-signal, for example a period of time after receiving the routine-trigger-signal. Such a period of time may correspond to the output-shaft-speed-threshold-duration that will be discussed below.

As will be discussed below, a purpose of performing this comparison is to determine that there is too much slip in a clutch in the driveline, which may have been caused by the plunger 23 experiencing a significant resistance to its movement in the bale chamber 24. Such resistance may be caused by crop material in the bale chamber 24 that cannot be sufficiently compressed for the plunger 23 to reach its most distal position during its rectilinear, reciprocal cycle. Therefore, the plunger 23 cannot be retracted out of the bale chamber 24 to continue its cycle.

If the output-shaft-speed signal does not satisfy at least one of the threshold-conditions, then the control unit 44 determines an actuator-control-signal for causing at least one actuator 220A, 220B to move at least one of the density doors 210A, 210B, 210C in order to enlarge the bale chamber 24. The control unit 44 can then provide the actuator-control-signal to a drive system for driving the at least one actuator 220A, 220B. Therefore, the enlargement of the bale chamber 24 can advantageously enable the plunger 23 to complete its rectilinear, reciprocal cycle and therefore remove or reduce slip in the clutch of the transmission 28.

In the example of Figure 5, the control unit 344 may provide the solenoid actuator 311 of the fluid supply controller 310 of the fluid supply circuit 300 with the actuator-control-signal. Alternatively or additionally, the control unit 344 may provide the actuator-control-signal to one or both of the two pumps 302A and 302B or the motor 303 for moving the at least one density door 210A, 210B, 210C. As a further example, the control unit 344 may provide the actuator-control-signal to the solenoid actuator 313 of the directional control valve 307 of the fluid supply circuit 300. However, as mentioned above, the drive system does not necessarily need to be a hydraulic circuit. In this way, any resistance that is experienced by the plunger 23 can be reduced.

A threshold-condition can include an output-shaft-speed-threshold-level, which can represent a speed of the output shaft 29 that is considered as indicative of too much slip in a clutch of the transmission 28. For instance, the output-shaft-speed-threshold-level can be a predetermined proportion of an expected output shaft speed. The predetermined proportion may be 90%, 80% or 70%, as non-limiting examples. So, for an expected output shaft speed of 50 rpm and an output-shaft-speed-threshold-level of 90%, the output-shaft-speed-signal will not satisfy the output-shaft-speed-threshold-level if it is less than 45 rpm. In this way, the output-shaft-speed-signal will not satisfy the output-shaft-speed-threshold-level if it is lower than the output-shaft-speed-threshold-level.

The control unit 44 can receive an input-shaft-speed signal that is representative of a rotational speed of the input shaft 27. In some examples, the control unit 44 can determine the output-shaft-speed-threshold-level based on the input-shaft-speed signal. For instance, the control unit 44 may be able to calculate an expected speed of the output shaft based on the input-shaft-speed signal, and then calculate the output-shaft-speed-threshold-level as a proportion (such as 90%) of the expected speed of the output shaft. In some examples, especially where the transmission can apply multiple transmission ratios, the control unit 44 may also receive a selected-gear signal. The selected-gear signal can represent which one of a plurality of transmission ratios is being applied. The control unit 44 can then multiply the input-shaft-speed signal by the selected-gear signal in order to determine the expected speed of the output shaft.

Optionally, a threshold-condition can also include an output-shaft-speed-threshold-duration. Such an output-shaft-speed-threshold-duration can represent a maximum period of time that the output shaft speed has to reach the output-shaft-speed-threshold-level, otherwise the threshold-condition will not be satisfied. In this way, the control unit 44 can compare the output-shaft-speed-signal with the output-shaft-speed-threshold-level after the output-shaft-speed-threshold-duration has expired in order to determine whether or not the threshold condition has been satisfied. In one example, the output-shaft-speed-threshold-duration may run from the receipt of the routine-trigger-signal. So, for an expected output shaft speed of 50 rpm, an output-shaft-speed-threshold-level of 90%, and an output-shaft-speed-threshold-duration of 2.5 seconds, the output-shaft-speed-signal will not satisfy the output-shaft-speed-threshold-level if it is less than 45 rpm at an instant in time that is 2.5 seconds after receipt of the routine-trigger-signal. In this way, the control unit 44 can determine that the output-shaft-speed signal does not satisfy at least one of the threshold-conditions if the output-shaft-speed signal is lower than the output-shaft-speed-threshold-level after expiry of the output-shaft-speed-threshold-duration following receipt of the routine-trigger-signal.

In a similar way to that described above, the control unit 44 can determine the output-shaft-speed-threshold-duration based on the input-shaft-speed signal. For instance, the control unit 44 can set a higher output-shaft-speed-threshold-duration for a higher expected speed of the output shaft. This can be on the basis that the transmission 38 can be given more time to get the output shaft up to speed for higher speeds.

The actuator-control-signal is for causing the at least one actuator 220A, 220B to move the at least one density door 210A, 210B, 210C by a door-displacement-amount in order to enlarge the bale chamber. The door-displacement-amount can include a distance that will put the door at an end position, which represents the maximum size of the bale chamber 24 in the dimension in which the door can move. For example, the control unit 44 can determine a current-door-displacement-amount (either using sensors, or based on a control signal that is provided by a door control algorithm). The current-door-displacement-amount can represent the extent by which an actuator has displaced the door from its end position. As discussed above, such an end position may be achieved when a fluid cylinder 220A, 220B is at its shortest length. In which case, the current-door-displacement-amount is the distance by which the fluid cylinder 220A, 220B has been extended. The control unit 44 can then set the door-displacement-amount as the current-door-displacement-amount in order to fully retract the actuator and make the bale chamber 24 as large as possible (in the dimension in which the door can move).

In another example, the door-displacement-amount can include a predetermined-displacement-amount. Initially the control unit 44 will provide the actuator-control-signal to the drive system for driving the at least one actuator 220A, 220B to move the at least one density door 210A, 210B, 210C by the predetermined-displacement-amount. Then, after expiry of an iterative-duration of time, the control unit 44 may again compare the output-shaft-speed signal with the one or more threshold-conditions. If the output-shaft-speed signal still does not satisfy at least one of the threshold-conditions, then the control unit 44 may determine and provide another actuator-control-signal in order to cause the at least one actuator 220A, 220B to move the at least one density door 210A, 210B, 210C by another door-displacement-amount in order to enlarge the bale chamber. This subsequent door-displacement-amount can also be the predetermined-displacement-amount such that the door is gradually moved outwards to increase the size of the bale chamber. Alternatively, a subsequent door-displacement-amount can be a current-door-displacement-amount in order to maximise the size of the bale chamber. In this way, after one iteration (or a predetermined number of iterations) of gradually increasing the size of the bale chamber 24, the bale chamber 24 can be enlarged to its maximum size so as to limit the time during which the clutch is slipping.

In some examples, the control unit 44 can compare the output-shaft-speed signal with a plurality of threshold-conditions. Then the control unit 44 can determine the door-displacement-amount based on which of the plurality of threshold-conditions have not been satisfied. For instance, if the output-shaft-speed signal does not satisfy a threshold-condition that represents only a modest amount of clutch slip, then the control unit 44 can determine a relatively small door-displacement-amount. Similarly, if the output-shaft-speed signal does not satisfy a threshold-condition that represents a severe amount of clutch slip, then the control unit 44 can determine a relatively large door-displacement-amount. This is on the basis that a modest amount of clutch slip can potentially be tolerated for longer than would be the case for a more severe amount of clutch slip.

In some examples, the control unit 44 can determine an error-value based on the comparison between the output-shaft-speed signal and the one or more threshold-conditions. The control unit 44 can then determine a door-displacement-amount based on the error-value. For instance, the control unit can apply a mathematical operation to the error-value in order to determine the door-displacement-amount. Alternatively, the control unit 44 can use a database or look-up table to determine the door-displacement-amount based on a calculated error-value. In a similar way to that described above, the control unit 44 can determine higher door-displacement-amounts for higher error-values.

In some implementations the control unit 44 can also perform processing to return the at least one density door to a "normal" operating position once the rotational speed of the output shaft 29 is back to its expected value. For example, the control unit 44 can, subsequently to the processing described above for enlarging the bale chamber 24, compare the output-shaft-speed signal with one or more end-threshold-conditions. The one or more end-threshold-conditions may comprise end-threshold-levels that may or may not be the same as the output-shaft-speed-threshold-levels that are described above. If the end-threshold-levels are not the same as the output-shaft-speed-threshold-levels, then this can introduce hysteresis into the processing.

If the output-shaft-speed signal satisfies one or more of the end-threshold-conditions, then the control unit 44 can determine an actuator-control-signal for causing the at least one actuator 220A, 220B to move the at least one density door 210A, 210B, 210C such that a door-displacement-amount is removed. In some examples, this can mean that the control of the position of the at least one density door can be returned to a door control algorithm that sets the position of the density door during normal baling operation. That is, any offset that is applied as a door-displacement-amount when the output-shaft-speed signal is too low can be removed.

Optionally, the agricultural system may include a plunger-position-sensor for providing a plunger-position-signal that represents the position of the plunger in the bale chamber. The plunger-position-sensor can include an angle sensor for measuring the angle of the conrod 36 that is pivotally connected to the plunger 23. In such an example, the control unit 44 may only determine the actuator-control-signal for enlarging the bale chamber 24 if: (i) the output-shaft-speed signal does not satisfy at least one of the threshold-conditions; and (ii) the plunger-position-signal takes one or more predetermined plunger-position-values. The one or more predetermined plunger-position-values may represent the plunger 23 being at a distal position in its rectilinear, reciprocal cycle. For instance, within 5%, 10% or 20% of its maximum extension. If the plunger-position-signal does not take one of these values, then the control unit 44 can determine that it is unlikely that the slip in the clutch is caused by crop material in the bale chamber 24. In which case, the control unit 44 can take alternative remedial action. The alternative remedial action (instead of, or in addition to enlarging the bale chamber 24) can include one or more of disengaging the clutch (optionally the first transmission clutch 49), operating the brake 58 if this is present, and sending a warning alert command to e.g. an information display in the cab of the tractor 11.

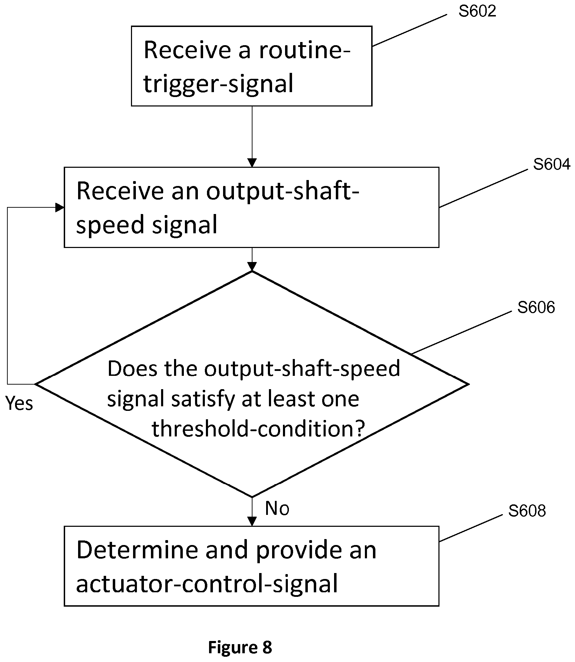

Turning to Figure 8, there is shown a method for controlling an agricultural baler. The method shown in Figure 8 may be a computer-implemented method executed by a control unit that is associated with the baler. As discussed above, the baler includes a bale chamber, at least one actuator for moving at least one density door, a rotary input shaft, a flywheel, and a driveline including a transmission for controllably transferring rotary drive between the input shaft and the flywheel.

At step S602, the method includes receiving a routine-trigger-signal. as discussed above, the routine-trigger-signal is a start-up-routine-signal that is received when the baler is started-up. That is, when it is desired to get the flywheel up to speed and the plunger to start moving according to a rectilinear, reciprocal cycle in the bale chamber. At step S604, the method includes receiving an output-shaft-speed signal that is representative of a rotational speed of the output shaft of the transmission. The output-shaft-speed signal may be directly provided by a sensor, or may be calculated based on other measured values.

In response to receiving the routine-trigger-signal, step S606 includes comparing the output-shaft-speed signal with one or more threshold-conditions, and determining whether or not the output-shaft-speed signal satisfies at least one of the threshold-conditions.

If the output-shaft-speed signal does satisfy at least one of the threshold-conditions, then this indicates that the output-shaft-speed has an acceptable value. Therefore, the method can return to step S604 to receive a new output-shaft-speed signal for comparing with the at least one threshold-condition. The method continues **around** this loop until a start-up-duration period of time has expired. That is, the method stops comparing the output-shaft-speed signal with the one or more threshold-conditions after a start-up-duration period of time. The start-up-duration period of time may be a predetermined period of time. The control unit may calculate the start-up-duration period of time based on one or more measurements of operating parameters of the baler. For instance, the control unit may determine or receive a clutch-temperature-signal, which represents the temperature of one or more clutches in the transmission. The method may stop going around the loop when the control unit determines that a quantity of heat (optionally in a predetermined period of time), based on the clutch-temperature-signal, taken up by the one or clutches exceeds a threshold value. Also, optionally the method can continue around the loop until a predefined number of startup cycles have been performed - this may involve the control unit counting the number of times that step S606 is performed. In response to the count reaching a predefined number, then the control unit can cause the method to end. In some examples, the method may implement a time delay when returning to step S604 after the control unit determines as step S606 that the threshold-condition has been satisfied.

If the output-shaft-speed signal does not satisfy at least one of the threshold-conditions, then this indicates that the output-shaft-speed has an unacceptable value. As discussed above, this may be due to the plunger being unable to overcome resistance caused by crop in the bale chamber. Therefore, as step S608, the method includes determining and providing an actuator-control-signal for causing the at least one actuator to move the at least one density door in order to enlarge the bale chamber. As discussed in detail above, this can reduce the reduce the resistance experienced by the plunger and potentially can enable the plunger to complete its rectilinear reciprocal cycle so that the baler can function correctly.

In some examples it can be beneficial for wait to the baler to fail before enlarging the bale chamber, as opposed to proactively enlarging the bale chamber as part of any start-up routine. This can be because the enlargement of the bale chamber can reduce the density and quality of a bale in the bale chamber. Therefore, it can be beneficial to only enlarge the bale chamber if absolutely necessary.

## Claims

1. An agricultural system comprising:
an agricultural baler (10), comprising:
a bale chamber partly defined by at least one movable density door (210A, 210B, 210C);
at least one actuator (220A, 220B) for moving the at least one density door (210A, 210B, 210C); and
a rotary input shaft (27) connected by way of a baler driveline to a rotatable flywheel (28), the driveline including a transmission for controllably transferring rotary drive between the input shaft (27) and the flywheel (28), wherein the transmission has an output shaft; **characterized by**
a control unit (320) configured to:
receive a start-up-routine-trigger-signal;
receive an output-shaft-speed signal that is representative of a rotational speed of the output shaft;
in response to receiving the start-up-routine-trigger-signal, compare the output-shaft-speed signal with one or more threshold-conditions, and
if the output-shaft-speed signal does not satisfy at least one of the threshold-conditions, then:
determine an actuator-control-signal for causing the at least one actuator (220A, 220B) to move the at least one density door (210A, 210B, 210C) in order to enlarge the bale chamber; and
provide the actuator-control-signal to a drive system for driving the at least one actuator (220A, 220B); wherein the control unit (320) is configured to stop comparing the output-shaft-speed signal with the one or more threshold-conditions after a start-up-duration period of time.

2. The agricultural system of Claim 1, wherein:
the one of more threshold-conditions comprise an output-shaft-speed-threshold-level, and
the control unit is configured to determine that the output-shaft-speed signal does not satisfy at least one of the threshold-conditions if the output-shaft-speed signal is lower than the output-shaft-speed-threshold-level.

3. The agricultural system of any preceding claim, wherein the output-shaft-speed-threshold-level comprises a predetermined proportion of an expected output shaft speed.

4. The agricultural system of any preceding claim, wherein the control unit is configured to:
receive an input-shaft-speed signal that is representative of a rotational speed of the input shaft; and
determine the output-shaft-speed-threshold-level based on the input-shaft-speed signal.

5. The agricultural system of any one of Claims 2 to 4, wherein:
the one of more threshold-conditions comprise an output-shaft-speed-threshold-duration,
the control unit is configured to:
determine that the output-shaft-speed signal does not satisfy at least one of the threshold-conditions if the output-shaft-speed signal is lower than the output-shaft-speed-threshold-level after expiry of the output-shaft-speed-threshold-duration following receipt of the start-up-routine-trigger-signal;
receive an input-shaft-speed signal that is representative of a rotational speed of the input shaft; and
determine the output-shaft-speed-threshold-duration based on the input-shaft-speed signal.

6. The agricultural system of any one of Claims 1 to 5, wherein the actuator-control-signal is for causing the at least one actuator (220A, 220B) to move the at least one density door (210A, 210B, 210C) by a door-displacement-amount in order to enlarge the bale chamber.

7. The agricultural system of Claim 6, wherein the door-displacement-amount comprises:
a distance that will put the door at an end position that represents the maximum size of the bale chamber in the dimension in which the door can move; or
a predetermined-displacement-amount.

8. The agricultural system of Claim 6, wherein the control unit is configured to:
compare the output-shaft-speed signal with the plurality of threshold-conditions; and
determine the door-displacement-amount based on which of the plurality of threshold-conditions have not been satisfied.

9. The agricultural system of any one of Claims 6 to 8, wherein the control unit is configured to:
determine an error-value based on the comparison between the output-shaft-speed signal and the one or more threshold-conditions; and
determine the door-displacement-amount based on the error-value.

10. The agricultural system of any one of Claims 1 to 9, wherein the control unit is configured to, subsequently:
compare the output-shaft-speed signal with one or more end-threshold-conditions; and
if the output-shaft-speed signal satisfies one or more of the end-threshold-conditions, then determine an actuator-control-signal for causing the at least one actuator (220A, 220B) to move the at least one density door (210A, 210B, 210C) such that a door displacement-amount is removed.

11. The agricultural system of any one of Claims 1 to 10, wherein the control unit is configured to:
receive a clutch-engagement-signal that represents the degree with which a clutch in the transmission has been engaged;
automatically generate a routine-trigger-signal based on the clutch-engagement-signal; and
in response to receiving the routine-trigger-signal, compare the output-shaft-speed signal with one or more threshold-conditions, and
if the output-shaft-speed signal does not satisfy at least one of the threshold-conditions, then:
determine the actuator-control-signal for causing the at least one actuator (220A, 220B) to move the at least one density door (210A, 210B, 210C) in order to enlarge the bale chamber; and
provide the actuator-control-signal to the drive system for driving the at least one actuator (220A, 220B).

12. The agricultural system of any one of Claims 1 to 11, further comprising:
a plunger-position-sensor for providing a plunger-position-signal that represents the position of the plunger in the bale chamber; and
wherein the control unit is configured to determine the actuator-control-signal for enlarging the bale chamber if: (i) the output-shaft-speed signal does not satisfy at least one of the threshold-conditions; and (ii) the plunger-position-signal takes one or more predetermined plunger-position-values.

13. A method for controlling an agricultural baler, the agricultural baler (10) comprising:
a bale chamber partly defined by at least one movable density door (210A, 210B, 210C);
at least one actuator (220A, 220B) for moving the at least one density door (210A, 210B, 210C); and
a rotary input shaft (27) connected by way of a baler driveline to a rotatable flywheel (28), the driveline including a transmission for controllably transferring rotary drive between the input shaft (27) and the flywheel (28), wherein the transmission has an output shaft;
wherein the method comprises:
receiving, at a control unit, a start-up-routine-trigger-signal;
receiving, at the control unit, an output-shaft-speed signal that is representative of a rotational speed of the output shaft;
in response to receiving the start-up-routine-trigger-signal, comparing the output-shaft-speed signal with one or more threshold-conditions, and
if the output-shaft-speed signal does not satisfy at least one of the threshold-conditions, then:
determining an actuator-control-signal for causing the at least one actuator (220A, 220B) to move the at least one density door (210A, 210B, 210C) in order to enlarge the bale chamber; and
providing the actuator-control-signal to a drive system for driving the at least one actuator (220A, 220B);
stopping comparing the output-shaft-speed signal with the one or more threshold-conditions after a start-up-duration period of time.

14. A computer program comprising instructions which, when executed by the control unit of the agricultural system of any of the Claims 1 to 12, cause the agricultural system to perform the steps of the method of Claim 13.

## Patentansprüche

1. Landwirtschaftliches System mit:
einer landwirtschaftlichen Ballenpresse (10) mit:
einer Ballenpresskammer, die teilweise durch zumindest eine bewegbare Verdichtungsklappe (210A, 210B, 210C) definiert ist;
zumindest einer Betätigungseinrichtung (220A, 220B) zum Bewegen der zumindest einen Verdichtungsklappe (210A, 210B, 210C); und
einer rotierenden Eingangswelle (27), die mittels eines Ballenpressen-Antriebstrangs mit einem rotierbaren Schwungrad (28) verbunden ist, wobei der Antriebsstrang ein Getriebe zum steuerbaren Übertragen einer rotatorischen Antriebsbewegung zwischen der Eingangswelle (27) und dem Schwungrad (28) umfasst, wobei das Getriebe eine Ausgangswelle aufweist;
**gekennzeichnet durch** eine Steuereinheit (320), die eingerichtet ist zum:
Empfangen eines Anfahrroutine-Auslösesignals;
Empfangen eines Ausgangswellen-Geschwindigkeitssignals, das kennzeichnend für eine Drehzahl der Ausgangswelle ist;
Vergleichen des Ausgangswellen-Geschwindigkeitssignals mit einer oder mehreren Grenzwert-Bedingungen in Reaktion auf das Empfangen des Anfahrroutine-Auslösesignals, und
wenn das Ausgangswellen-Geschwindigkeitssignal nicht zumindest eine Grenzwert-Bedingung erfüllt, dann:
Bestimmen eines Betätigungseinrichtungs-Steuersignals zum Veranlassen der zumindest einen Betätigungseinrichtung (220A, 220B) zum Bewegen der zumindest einen Verdichtungsklappe (210A, 210B, 210C), um die Ballenpresskammer zu vergrößern; und
Bereitstellen des Betätigungseinrichtungs-Steuersignals an ein Antriebssystem zum Antreiben der zumindest einen Betätigungseinrichtung (220A, 220B), wobei die Steuereinheit (320) dazu eingerichtet ist, den Vergleich des Ausgangswellen-Geschwindigkeitssignals mit der einen oder den mehreren Grenzwert-Bedingungen nach einer Anfahrdauer zu beenden.

2. Landwirtschaftliches System nach Anspruch 1, wobei:
die eine oder die mehreren Grenzwert-Bedingungen einen Ausgangswellen-Geschwindigkeitsgrenzwert aufweisen, und
die Steuereinheit dazu eingerichtet ist, zu bestimmen, dass das Ausgangswellen-Geschwindigkeitssignal nicht zumindest eine der Grenzwert-Bedingungen erfüllt, wenn das Ausgangswellen-Geschwindigkeitssignal niedriger als der Ausgangswellen-Geschwindigkeitsgrenzwert ist.

3. Landwirtschaftliches System nach einem der vorhergehenden Ansprüche, wobei der Ausgangswellen-Geschwindigkeitsgrenzwert eine vorbestimmte Proportion einer erwarteten Ausgangswellen-Geschwindigkeit aufweist.

4. Landwirtschaftliches System nach einem der vorhergehenden Ansprüche, wobei die Steuereinheit eingerichtet ist zum:
Empfangen eines Eingangswellen-Geschwindigkeitssignals, das kennzeichnend für eine Drehzahl der Eingangswelle ist; und
Bestimmen des Ausgangswellen-Geschwindigkeitsgrenzwerts basierend auf dem Eingangswellen-Geschwindigkeitssignal.

5. Landwirtschaftliches System nach einem der Ansprüche 2 bis 4, wobei:
die eine oder die mehreren Grenzwert-Bedingungen eine Ausgangswellen-Geschwindigkeitsgrenzwertdauer aufweisen, wobei die Steuereinheit eingerichtet ist zum:
Bestimmen, dass das Ausgangswellen-Geschwindigkeitssignal nicht zumindest eine der Grenzwert-Bedingungen erfüllt, wenn das Ausgangswellen-Geschwindigkeitssignal nach Ablauf der Ausgangswellen-Geschwindigkeitsgrenzwertdauer nach dem Empfang des Anfahrroutine-Auslösesignals niedriger als der Ausgangswellen-Geschwindigkeitsgrenzwert ist;
Empfangen eines Eingangswellen-Geschwindigkeitssignals, das kennzeichnend für eine Drehzahl der Eingangswelle ist; und
Bestimmen der Ausgangswellen-Geschwindigkeitsgrenzwertdauer basierend auf dem Eingangswellen-Geschwindigkeitssignal.

6. Landwirtschaftliches System nach einem der Ansprüche 1 bis 5, wobei das Betätigungseinrichtungs-Steuersignal dazu vorgesehen ist, die zumindest eine Betätigungseinrichtung (220A, 220B) dazu zu veranlassen, die zumindest eine Verdichtungsklappe (210A, 210B, 210C) um einen Klappenverstellbetrag zu bewegen, um die Ballenpresskammer zu vergrößern.

7. Landwirtschaftliches System nach Anspruch 6, wobei der Klappenverstellbetrag umfasst:
eine Distanz, die die Klappe in eine Endposition versetzt, die die maximale Größe der Ballenpresskammer in der Dimension, in der sich die Klappe bewegen kann, kennzeichnet; oder
einen vorbestimmten Verstellbetrag.

8. Landwirtschaftliches System nach Anspruch 6, wobei die Steuereinheit eingerichtet ist zum:
Vergleichen des Ausgangswellen-Geschwindigkeitssignals mit der Mehrzahl von Grenzwert-Bedingungen; und
Bestimmen des Klappenverstellbetrags basierend darauf, welche der Mehrzahl von Grenzwert-Bedingungen nicht erfüllt wurden.

9. Landwirtschaftliches System nach einem der Ansprüche 6 bis 8, wobei die Steuereinheit eingerichtet ist zum:
Bestimmen eines Fehlerwerts basierend auf dem Vergleich zwischen dem Ausgangswellen-Geschwindigkeitssignal und dem einen oder den mehreren Grenzwert-Bedingungen; und
Bestimmen des Klappenverstellbetrags basierend auf dem Fehlerwert.

10. Landwirtschaftliches System nach einem der Ansprüche 1 bis 9, wobei die Steuereinheit dazu eingerichtet ist, aufeinander folgend:
Vergleichen des Ausgangswellen-Geschwindigkeitssignals mit einer oder mehreren End-Grenzwert-Bedingungen; und
wenn das Ausgangswellen-Geschwindigkeitssignal eine oder mehrere der End-Grenzwertbedingungen erfüllt, dann Bestimmen eines Betätigungseinrichtungs-Steuersignals zum Veranlassen der zumindest einen Betätigungseinrichtung (220A, 220B) zum Bewegen der zumindest einen Verdichtungsklappe (210A, 210B, 210C), derart, dass ein Klappenverstellbetrag zurückgesetzt wird.

11. Landwirtschaftliches System nach einem der Ansprüche 1 bis 10, wobei die Steuereinheit eingerichtet ist zum:
Empfangen eines Kupplungs-Einrücksignals, das einen Grad kennzeichnet, mit dem eine Kupplung des Getriebes eingerückt wurde;
automatischen Erzeugen eines Routine-Auslösesignals basierend auf dem Kupplungs-Einrücksignal; und
in Reaktion auf das Empfangen des Routine-Auslösesignals, Vergleichen des Ausgangswellen-Geschwindigkeitssignals mit einer oder mehreren Grenzwert-Bedingungen; und
wenn das Ausgangswellen-Geschwindigkeitssignal nicht zumindest eine der Grenzwert-Bedingungen erfüllt, dann:
Bestimmen des Betätigungseinrichtungs-Steuersignals zum Veranlassen der zumindest einen Betätigungseinrichtung (220A, 220B) zum Bewegen der zumindest einen Verdichtungsklappe (210A, 210B, 210C), um die Ballenpresskammer zu vergrößern; und
Bereitstellen des Betätigungseinrichtungs-Steuersignals an das Antriebssystem zum Antreiben der zumindest einen Betätigungseinrichtung (220A, 220B).

12. Landwirtschaftliches System nach einem der Ansprüche 1 bis 11, das des Weiteren aufweist:
einen Kolbenpositionssensor zum Bereitstellen eines Kolbenpositionssignals, das die Position des Kolbens in der Ballenpresskammer kennzeichnet; und
wobei die Steuereinheit dazu eingerichtet ist, das Betätigungseinrichtungs-Steuersignal zum Vergrößern der Ballenpresskammer zu bestimmen, wenn: (i) das Ausgangswellen-Geschwindigkeitssignal nicht zumindest eine der Grenzwert-Bedingungen erfüllt; und (ii) das Kolbenpositionssignal einen oder mehrere vorbestimmte Kolbenpositionswerte annimmt.

13. Verfahren zum Steuern einer landwirtschaftlichen Ballenpresse, wobei die landwirtschaftliche Ballenpresse (10) umfasst:
eine Ballenpresskammer, die teilweise durch zumindest eine bewegbare Verdichtungsklappe (210A, 210B, 210C) definiert ist;
zumindest eine Betätigungseinrichtung (220A, 220B) zum Bewegen der zumindest einen Verdichtungsklappe (210A, 210B, 210C); und
eine rotierende Eingangswelle (27), die mittels eines Ballenpressen-Antriebstrangs mit einem rotierbaren Schwungrad (28) verbunden ist, wobei der Antriebsstrang ein Getriebe zum steuerbaren Übertragen einer rotatorischen Antriebsbewegung zwischen der Eingangswelle (27) und dem Schwungrad (28) umfasst, wobei das Getriebe eine Ausgangswelle aufweist;
wobei das Verfahren die Schritte umfasst:
Empfangen, in einer Steuereinheit, eines Anfahrroutine-Auslösesignals;
Empfangen, in der Steuereinheit, eines Ausgangswellen-Geschwindigkeitssignals, das kennzeichnend für eine Drehzahl der Ausgangswelle ist;
in Reaktion auf das Empfangen des Anfahrroutine-Auslösesignals, Vergleichen des Ausgangswellen-Geschwindigkeitssignals mit einer oder mehreren Grenzwert-Bedingungen, und
wenn das Ausgangswellen-Geschwindigkeitssignal nicht zumindest eine der Grenzwert-Bedingungen erfüllt, dann:
Bestimmen eines Betätigungseinrichtungs-Steuersignals zum Veranlassen der zumindest einen Betätigungseinrichtung (220A, 220B) zum Bewegen der zumindest einen Verdichtungsklappe (210A, 210B, 210C), um die Ballenpresskammer zu vergrößern; und
Bereitstellen des Betätigungseinrichtungs-Steuersignals an ein Antriebssystem zum Antreiben der zumindest einen Betätigungseinrichtung (220A, 220B);
Beenden des Vergleichens des Ausgangswellen-Geschwindigkeitssignals mit der einen oder den mehreren Grenzwert-Bedingungen nach einer Anfahrdauer.

14. Computerprogramm, das Befehle umfasst, die, wenn diese von der Steuereinheit des landwirtschaftlichen Systems nach einem der Ansprüche 1 bis 12 ausgeführt werden, das landwirtschaftliche System dazu veranlassen, die Schritte des Verfahrens nach Anspruch 13 auszuführen.

## Revendications

1. Système agricole comprenant :
une presse à balles agricole (10), comprenant :
une chambre de compression délimitée en partie par au moins une porte de densité mobile (210A, 210B, 210C) ;
au moins un actionneur (220A, 220B) pour déplacer l'au moins une porte de densité (210A, 210B, 210C) ; et
un arbre d'entrée rotatif (27) raccordé par l'intermédiaire d'une ligne d'arbres de transmission de presse à balles à un volant rotatif (28), la ligne d'arbres de transmission incluant une transmission pour transférer de manière contrôlée l'entraîneur rotatif entre l'arbre d'entrée (27) et le volant (28), dans lequel la transmission comporte un arbre de sortie ;
**caractérisé en ce que** une unité de commande (320) est configurée pour :
recevoir un signal de déclenchement de la routine de démarrage ;
recevoir un signal de vitesse de l'arbre de sortie qui est représentatif d'une vitesse de rotation de l'arbre de sortie ;
en réponse à la réception du signal de déclenchement de la routine de démarrage, comparer le signal de vitesse de l'arbre de sortie avec une ou plusieurs conditions de seuil, et
si le signal de vitesse de l'arbre de sortie ne satisfait pas à au moins une des conditions de seuil, alors :
déterminer un signal de commande de l'actionneur pour inciter l'au moins un actionneur (220A, 220B) à déplacer l'au moins une porte de densité (210A, 210B, 210C) afin d'agrandir la chambre de compression ; et
fournir le signal de commande de l'actionneur à un système d'entraînement pour entraîner l'au moins un actionneur (220A, 220B) dans lequel l'unité de commande (320) est configurée pour arrêter de comparer le signal de vitesse de l'arbre de sortie avec le ou les conditions de seuil après une période correspondant à la durée de démarrage.

2. Système agricole selon la revendication 1, dans lequel :
la ou les conditions de seuil comprennent un niveau de seuil de vitesse de l'arbre de sortie, et
l'unité de commande est configurée pour déterminer que le signal de vitesse de l'arbre de sortie ne satisfait pas à au moins une des conditions de seuil si le signal de vitesse de l'arbre de sortie est inférieur au niveau de seuil de vitesse de l'arbre de sortie.

3. Système agricole selon l'une quelconque des revendications précédentes, **caractérisé en ce que** le niveau seuil de vitesse de l'arbre de sortie comprend une proportion prédéterminée de la vitesse attendue de l'arbre de sortie.

4. Système agricole selon l'une quelconque des revendications précédentes, dans lequel l'unité de commande est configurée pour :
recevoir un signal de vitesse de l'arbre d'entrée qui est représentatif d'une vitesse de rotation de l'arbre d'entrée ;
déterminer le niveau de seuil de vitesse de l'arbre de sortie en fonction du signal de vitesse de l'arbre d'entrée.

5. Système agricole selon l'une quelconque des revendications 2 à 4, dans lequel :
la ou les conditions de seuil comprennent une durée de seuil de vitesse de l'arbre de sortie, l'unité de commande est configurée pour :
déterminer que le signal de vitesse de l'arbre de sortie ne satisfait pas à au moins l'une des conditions de seuil si le signal de vitesse de l'arbre de sortie est inférieur au seuil de vitesse de l'arbre de sortie après expiration de la durée du seuil de vitesse de l'arbre de sortie suivant la réception du signal de déclenchement de la routine de démarrage ;
recevoir un signal de vitesse de l'arbre d'entrée qui est représentatif d'une vitesse de rotation de l'arbre d'entrée ;
déterminer la durée du seuil de vitesse de l'arbre de sortie en fonction du signal de vitesse de l'arbre d'entrée.

6. Système agricole selon l'une quelconque des revendications 1 à 5, dans lequel le signal de commande de l'actionneur est destiné à inciter l'au moins un actionneur (220A, 220B) à déplacer l'au moins une porte de densité (210A, 210B, 210C) d'une valeur de déplacement de porte pour agrandir la chambre de compression.

7. Système agricole selon la revendication 6, dans lequel la valeur de déplacement de la porte comprend :
une distance qui mettra la porte dans une position de fin de course qui représente la taille maximale de la chambre de compression selon la valeur de laquelle la porte peut se déplacer ; ou
une valeur de déplacement prédéterminé.

8. Système agricole selon la revendication 6, dans lequel l'unité de commande est configurée pour :
comparer le signal de vitesse de l'arbre de sortie avec la pluralité de conditions de seuil ; et
déterminer la valeur de déplacement de la porte en fonction de la condition de seuil qui n'a pas été satisfaite.

9. Système agricole selon l'une quelconque des revendications 6 à 8, dans lequel l'unité de commande est configurée pour :
déterminer une valeur d'erreur en fonction de la comparaison entre le signal de vitesse de l'arbre de sortie et la ou les conditions de seuil ; et
déterminer la valeur de déplacement de la porte en fonction de la valeur de l'erreur.

10. Système agricole selon l'une quelconque des revendications 1 à 9, dans lequel l'unité de commande est configurée pour, par la suite :
comparer le signal de vitesse de l'arbre de sortie avec une ou plusieurs conditions de fin de seuil ; et
si le signal de vitesse de l'arbre de sortie satisfait à une ou plusieurs des conditions de fin de seuil, déterminer un signal de commande de l'actionneur pour inciter l'au moins un actionneur (220A, 220B) à déplacer l'au moins une porte de densité (210A, 210B, 210C) de sorte qu'une valeur de déplacement de la porte est supprimée.

11. Système agricole selon l'une quelconque des revendications 1 à 10, dans lequel l'unité de commande est configurée pour :
recevoir un signal d'engagement d'embrayage qui représente le degré auquel un embrayage est engagé dans la transmission ;
générer automatiquement un signal de déclenchement de routine en fonction du signal d'engagement d'embrayage ; et
en réponse à la réception du signal de déclenchement de routine, comparer le signal de vitesse de l'arbre de sortie avec une ou plusieurs conditions de seuil, et
si le signal de vitesse de l'arbre de sortie ne satisfait pas à au moins une des conditions de seuil, alors :
déterminer le signal de commande de l'actionneur pour inciter l'au moins un actionneur (220A, 220B) à déplacer l'au moins une porte de densité (210A, 210B, 210C) afin d'agrandir la chambre de compression ; et
fournir le signal de commande de l'actionneur au système d'entraînement pour entraîner l'au moins un actionneur (220A, 220B).

12. Système agricole selon l'une quelconque des revendications 1 à 11, comprenant en outre :
un capteur de position du plongeur pour fournir un signal de position du plongeur qui représente la position du plongeur dans la chambre de chambre de compression ; et
dans lequel l'unité de commande est configurée pour déterminer le signal de commande de l'actionneur afin d'agrandir la chambre de compression si : (i) le signal de vitesse de l'arbre de sortie ne satisfait pas à au moins une des conditions de seuil ; et (ii) le signal de position du plongeur relève une ou plusieurs valeurs prédéterminées de position du plongeur.

13. Procédé de commande d'une presse à balles agricole, la presse à balles agricole (10) comprenant :
une chambre de compression délimitée en partie par au moins une porte de densité mobile (210A, 210B, 210C) ;
au moins un actionneur (220A, 220B) pour déplacer l'au moins une porte de densité (210A, 210B, 210C) ; et
un arbre d'entrée rotatif (27) raccordé par l'intermédiaire d'une ligne d'arbres de transmission de presse à balles à un volant rotatif (28), la ligne d'arbres de transmission incluant une transmission pour transférer de manière contrôlée l'entraîneur rotatif entre l'arbre d'entrée (27) et le volant (28), dans lequel la transmission comporte un arbre de sortie ;
dans lequel le procédé comprend :
la réception, au niveau d'une unité de commande, d'un signal de déclenchement de la routine de démarrage ;
la réception, au niveau d'une unité de commande, d'un signal de vitesse de l'arbre de sortie qui est représentatif d'une vitesse de rotation de l'arbre de sortie ;
en réponse à la réception du signal de déclenchement de la routine de démarrage, la comparaison du signal de vitesse de l'arbre de sortie avec une ou plusieurs conditions de seuil, et
si le signal de vitesse de l'arbre de sortie ne satisfait pas à au moins une des conditions de seuil, alors :
la détermination d'un signal de commande de l'actionneur pour inciter l'au moins un actionneur (220A, 220B) à déplacer l'au moins une porte de densité (210A, 210B, 210C) afin d'agrandir la chambre de compression ; et
la fourniture du signal de commande de l'actionneur au système d'entraînement pour entraîner l'au moins un actionneur (220A, 220B) ;
l'arrêt de la comparaison du signal de vitesse de l'arbre de sortie avec la ou les conditions de seuil après une période correspondant à la durée de démarrage.

14. Programme informatique comprenant des instructions qui, lorsqu'elles sont exécutées par l'unité de commande du système agricole selon l'une quelconque des revendications 1 à 12 entraînent le système agricole à exécuter les étapes du procédé de la revendication 13.
